# EUROPEAN PATENT APPLICATION

(11) **EP 1 560 407 A1**
(43) Date of publication of application: **03.08.2005**
(21) Application number: 05001963.7
(22) Date of filing: 31.01.2005
(51) Int. Cl.: H04M 1/725

(54) **Apparatus and method for processing characters in a wireless terminal**

(30) Priority: 29.01.2004 KR 2004005757; 24.09.2004 KR 2004077136
(71) Applicant: Samsung Electronics Co., Ltd., Suwon-si, Gyeonggi-do (KR)
(72) Inventor: Seo, Jeong-Wook Samsung Electronics Co., Ltd., Suwon-si Gyeonggi-do (KR); Kim, Hwan Samsung Electronics Co., Ltd., Suwon-si Gyeonggi-do (KR); Park, Wei-Jin Samsung Electronics Co., Ltd., Suwon-si Gyeonggi-do (KR)
(74) Representative: Lang, Johannes, Dipl.-Ing.

(57) **Abstract**

An apparatus and a method for processing a character file of a wireless terminal having a character agent function are provided. The apparatus comprises a character memory for storing a character structure and character images. The character structure comprises a character type and character image information. The character image comprises at least one frame image. A controller performs the character agent function by processing character structure data and character image data stored in the character memory through analyzing a state of the wireless terminal. A display section displays the character structure and image information output from the controller.

## Description

### PRIORITY

This application claims the benefit under 35 U.S.C. 119(a) to an application entitled "Apparatus And Method For Processing Characters In Wireless Terminal" filed with the Korean Intellectual Property Office on January 29, 2004 and assigned Serial No. 2004-5757 and on September 25, 2004 and assigned Serial No.2004-77136 the entire contents of which are incorporated herein by reference.

### BACKGROUND OF THE INVENTION

### Field of the Invention:

The present invention relates to a character agent apparatus and a character agent method for a wireless terminal. More particularly, the present invention relates to a character structure and a method for transmitting characters in a wireless terminal.

### Description of the Related Art:

Recently, Internet users have been employing avatars when conducting Internet communication or when using game sites and community sites. The avatars refer to animation characters representing the Internet users. That is, Netizens using the Internet may have not only E-mail addresses, but also their own avatars as a new tool for Internet identity. The avatar industry can become popular with the development of multimedia-support technology because Netizens had been confronted with limitation of expression when conducting text-based PC communication.

However, although the avatars have appeared in cyber space as a tool of expression, the use of the avatars is limited solely to doll game services. Therefore, it is necessary to expand the application of the avatars so as to broaden their use on the Internet. Since currently available avatar services are limited to the doll game services, Internet users are reluctant to use avatar services using a wireless terminal. Accordingly, avatar services provided for wireless terminals must be distinct from avatar services used in conventional Internet online games. To this end, it is necessary to develop a new avatar system capable of providing new avatar services overcoming the limitations of simple doll game services by combining the functions and characteristics of conventional avatars to match the mobile networks/apparatuses.

As mentioned above, the wireless terminal has been equipped with various functions in addition to basic telephone functions. One of these is a character agent function for providing avatars capable of displaying the state of the wireless terminal. In addition, the wireless terminal must be equipped with a function for storing and backing up avatars and various information of the wireless terminal related to the avatars. Herein, characters refer to the data of image files.

Currently, wireless terminals capable of performing local communication therebetween have been developed. The local communication includes IrDA communication, blue-tooth and USB communication. Accordingly, it is possible to transmit the characters to other wireless terminals through local communication.

### SUMMARY OF THE INVENTION

Accordingly, the present invention has been made to solve the above-mentioned problems occurring in the prior art, and an object of the present invention is to provide an apparatus and a method for realizing a character agent function in a wireless terminal.

Another object of the present invention is to provide a character file structure and a method for processing characters in a wireless terminal having a character agent function.

Still another object of the present invention is to provide an apparatus and a method for transmitting character files in a wireless terminal having a character agent function.

Still another object of the present invention is to provide an apparatus and a method for transmitting character files in a wireless terminal having a character agent function through local communication.

Still another object of the present invention is to provide an apparatus and a method for allowing a wireless terminal to perform a character agent function by receiving character files through local communication.

Still another object of the present invention is to provide a method for backing-up data of a wireless terminal by using a character agent function in a wireless terminal having a character display function.

Still another object of the present invention is to provide a method for storing and backing up data and characters of a wireless terminal in an external server through a wireless communication network within a predetermined period of time which is preset in a wireless terminal having a character display function.

Still another object of the present invention is to provide a method for storing characters in an external server through a wireless communication network by using a wireless terminal having a character display function.

Still another object of the present invention is to provide a method for creating avatar files as transmission files and transmitting the avatar files to a backup server through a wireless communication network by using a wireless terminal having a character display function.

Still another object of the present invention is to provide a method for storing and backing up characters, such as avatars representing operational states of a wireless terminal and avatar houses displayed in a screen in a waiting mode, in an external server through a wireless communication network.

Still another object of the present invention is to provide a method for storing and backing up characters, such as avatars representing operational states of a wireless terminal, avatar houses displayed in a screen in a waiting mode, and items displayed in the avatar houses, in an external server through a wireless communication network.

An apparatus for processing a character file of a wireless terminal having a character agent function, the apparatus comprising a character memory for storing a character structure and character images, the character structure having a character type and character image information, the character image having at least one frame image, a controller for performing the character agent function by processing character structure data and character image data stored in the character memory by analyzing an operational state of the wireless terminal, and a display section for displaying the character structure and image information output from the controller. The apparatus further comprises the controller generating a transmission message by using a character structure of a character and images selected in a character gift mode, a local communication section(IrDA, bluetooth, USB etc) for modulating and outputting the transmission message through a predetermined local communication scheme, the display section for displaying a gift menu under a control of the controller in the character gift mode. The apparatus further comprises the controller generating a transmission message by using a character structure of a character and images selected in a character backup service mode, a communication section(RF) connected to the backup server through the wireless network so as to transmit the transmission message to the backup server by converting the transmission message into a wireless signal, and a display section for displaying a backup service state under a control of the controller in the character backup service mode. The character memory comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, a number of frame headers corresponds to the number of frame images of each animation header. The character header comprises the character type, description information for explaining the character type, and information related a number of animation classes which are expressed in the character type. The animation header comprises an animation ID for identifying a motion animation or a motion image of the character and information related to a number of frame images for expressing the animation. The frame header comprises start position data of the frame image, size data of the frame image, and display time interval data between frames. The character type comprises avatar, item, back-scenery, avatar house and so on.

A method for transmitting a character file of a wireless terminal performing a character agent function comprises the steps of displaying images of stored character files when a character transmission mode is selected, generating a transmission message by using the character file having character file structure information and character images when a character image is selected, and transmitting the transmission message of the character file. The transmission message is transmitted other terminal via local communication section(IrDA, bluetooth, USB etc) and/or a back up server via RF communication section. The character file comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, and a number of frame headers corresponds to the number of frame images of each animation header. The character header comprises the character type, description information for explaining the character type, and information related a number of animation classes which are expressed in the character type. The animation header comprises an animation ID for identifying a motion animation or a motion image of the character and information related to a number of frame images for expressing the animation. The frame header comprises start position data of the frame image, size data of the frame image, and display time interval data between frames. The character type comprises avatar, item, back-scenery, avatar house and so on.

### BRIEF DESCRIPTION OF THE DRAWINGS

The above and other objects, features and advantages of the present invention will be more apparent from the following detailed description taken in conjunction with the accompanying drawings, in which:
FIG. 1 is a diagram illustrating a wireless terminal having a character agent function according to an embodiment of the present invention;
FIG. 2 is a diagram illustrating a structure of a character memory for performing an agent function according to an embodiment of the present invention;
FIGS. 3A to 3C are diagrams illustrating header structures of character files stored in a character memory shown in FIG. 2;
FIGS. 4A and 4B are diagrams illustrating header structures of avatar files in character files according to an embodiment of the present invention;
FIGS. 5A to 5L are diagrams illustrating examples of avatar frame images of avatar files according to an embodiment of the present invention;
FIGS. 6A to 6L are diagrams illustrating examples of another avatar frame images of avatar files according to an embodiment of the present invention;
FIGS. 7A and 7B are diagrams illustrating header structures of item files in character files according to an embodiment of the present invention;
FIGS. 8A to 8C are diagrams illustrating examples of item frames of item files according to an embodiment of the present invention;
FIGS. 9A and 9B are diagrams illustrating header structures of back-scenery image files in character files according to an embodiment of the present invention;
FIGS. 10A to 10D are diagrams illustrating examples of back-scenery frame images of back-scenery image files according to an embodiment of the present invention;
FIGS. 11A and 11B are diagrams illustrating header structures of avatar house files in character files according to an embodiment of the present invention;
FIGS. 12A to 12D are diagrams illustrating examples of avatar house frame image of avatar house files according to an embodiment of the present invention;
FIGS. 13A to 13J are diagrams illustrating other header structures of character files stored in a character memory shown in FIG. 2;
FIG. 14 is a diagram illustrating a structure of a local communication unit shown in FIG. 1;
FIGS. 15A and 15B are diagrams for explaining an operation of a local communication unit shown in FIG. 14;
FIG. 16 is a diagram illustrating a structure of a network for backing up data of a wireless terminal having an avatar agent function according to an embodiment of the present invention;
FIG. 17 is a diagram illustrating a menu used when transmitting and backing up characters according to an embodiment of the present invention;
FIGS. 18A to 18C are diagrams illustrating a menu used for displaying a transmission procedure of characters to other wireless terminals according to an embodiment of the present invention;
FIGS. 19A to 19C are diagrams views illustrating a menu for displaying a backup procedure of characters in a server according to an embodiment of the present invention;
FIGS. 20A and 20B are diagrams illustrating structures of character files when the character files are transmitted to a backup server or other wireless terminals according to an embodiment of the present invention;
FIG. 21 is a flowchart illustrating a procedure of transmitting character files to other wireless terminals according to an embodiment of the present invention;
FIG. 22 is a flowchart illustrating a procedure of receiving and processing character files in a wireless terminal according to an embodiment of the present invention;
FIG. 23 is a flowchart illustrating a procedure of performing a backup function in a wireless terminal according to an embodiment of the present invention; and
FIG. 24 is a flowchart illustrating a procedure of transmitting characters from a wireless terminal to a backup server according to an embodiment of the present invention.

### DETAILED DESCRIPTION OF THE PREFERRED EMBODIMENTS

Hereinafter, embodiments of the present invention will be described with reference to the accompanying drawings. In the following detailed description, the same reference numerals are used to indicate the same elements.

The embodiments of the present invention relate to an apparatus and a method for transmitting data files of a wireless terminal. The data files include image files, music files, or character files. The following description will be explained on the assumption that the data files are character files.

In the following description, the structure of the character file and the format of the transmission file will be described in detail. The character file includes header data and image data, and a header includes a character header, an animation header and a frame header. In addition, image data include character images according to the header. The term "character" represents data displayed with images, and the header data refer to data for displaying the character images. According to the embodiments of the present invention, the characters of the wireless terminal include avatars, avatar houses, items and back-sceneries.

The avatars include avatar animations representing emotional states of the wireless terminal, avatar images representing emotions according to text messages of the wireless terminal, such as short messaging service (SMS), enhanced messaging service (EMS), and mobile messaging service (MMS), and avatar images for displaying various events generated from the wireless terminal. According to the embodiments of the present invention, the avatars include a plurality avatar images representing emotional states of the wireless terminal, emotions according to text messages of the wireless terminal, various events generated from the wireless terminal. In addition, each avatar image includes a corresponding header. The avatar file includes the header and the images in which the header has information, such as an ID for each image, a start point, the number of images, a display position and an animation name. In an avatar transmission mode, the avatar images and headers corresponding to the avatar images are generated in the form of transmission files and the transmission files are sent to other wireless terminals.

The avatar house refers to an image displayed in a screen of the wireless terminal in a waiting mode, in which at least one item is combined with a back-scenery image of the avatar house. That is, at least one item selected by the user is displayed in the back-scenery image of the wireless terminal in the waiting mode of the wireless terminal. At this time, the avatars can be displayed in the avatar house. In this case, the file structure of the avatar house may include the header and the images in which the header has an avatar house header and item headers combined with the avatar house. The avatar house header includes an avatar house ID, a display position of the avatar, a size of the avatar house, and a header name. Each item header includes an item index, a display position of the item in the avatar house, and an item name. In an avatar house transmission mode, the avatar house, headers corresponding to the items, a back-scenery image of the avatar house, and item images are compressed in the form of compressed files and the compressed files are transmitted to other wireless terminals.

The items refer to images to be displayed in the avatar house. The items are displayed in connection with the avatar house. If the items are not connected to the avatar house, the items are not displayed. Thus, the avatar images, which are not connected to the avatar house, must be transmitted separately. Each item includes a header and an image in which the header has an item index, a display position of the item in the avatar house, and an item name. Herein, if the item is not connected to the avatar house, display position information of the item may be default display position information.

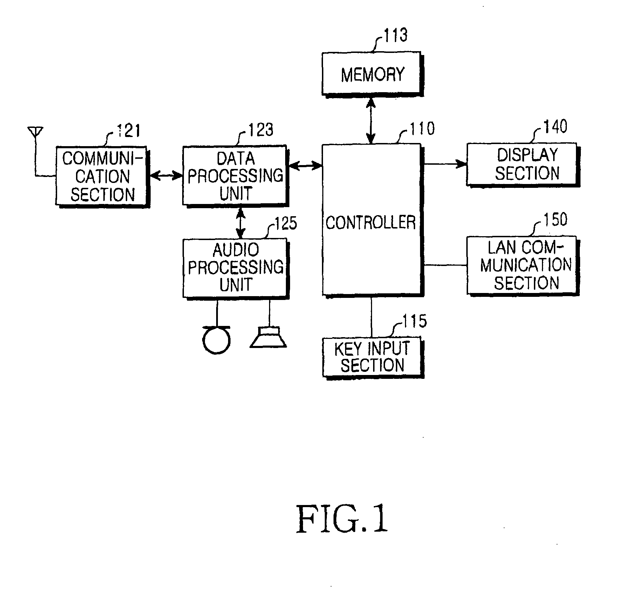

FIG. 1 is a view illustrating a structure of a wireless terminal according to one embodiment of the present invention.

Referring to FIG. 1, a communication section 121 performs a wireless communication function between the wireless terminal and a wireless communication network. The communication section 121 includes an RF transmitter (not shown) for up-converting and amplifying a frequency of a transmitted signal and an RF receiver (not shown) for low-noise amplifying and down-converting a frequency of a received signal. A data processing unit 123 includes a transmitter (not shown) for coding and modulating the transmitted signal and a receiver (not shown) for decoding and demodulating the received signal. That is, the data processing unit 123 includes a MODEM and a CODEC. Herein, the CODEC includes a data CODEC for processing data and an audio CODEC for processing audio signals, such as voice.

A key input section 115 includes various functional keys for inputting numbers and character data and for setting various functions. In addition, key input section 115 includes functional keys for processing characters according to embodiments of the present invention.

A memory 113 includes a program memory and a data memory. The program memory stores programs used for processing basic functions of the wireless terminal and programs used for processing characters between wireless terminals. The data memory temporarily stores data generated while executing the programs. In addition, the data memory includes a character memory for storing character files according to embodiments of the present invention. The character memory includes a character structure memory and a character image memory, in which the character structure memory stores header information of the character and the character image memory stores actual image information for performing the animation. The character memory may operate as a file system and each character may include a memory (file system) index. The character files can be separately stored in the character memory according to the their functions with respect to characters. As mentioned above, the characters include the avatars, the avatar houses, and the items.

A controller 110 controls an operation of the wireless terminal. In addition, the controller 110 may include the data processing unit 123. That is, in a case of the wireless terminal, the controller 110 may be an MSM chip having the data processing unit 123. According to one embodiment of the present invention, the controller 110 can represent the state of the wireless terminal by using the characters. In addition, a microphone and a speaker are connected to the data processing unit 123 or the controller 110.

A display section 140 displays the character images and user data under the control of the controller 110. The display section 140 may include a Liquid Crystal Display (LCD). In this case, the display section 140 includes a LCD controller, a memory for storing image data, and a LCD device. If the LCD is embodied as a touch screen type LCD, the LCD may act as an input section.

A local communication section 150 is connected to an external communication unit for the purpose of providing data communication between the wireless terminal and the external communication unit (not shown). Herein, the external communication unit includes other wireless terminals, computers, or digital cameras. The local communication section 150 is an interface between the wireless terminal and the external communication unit so that resources stored in the wireless terminal can be transmitted to the external communication unit through the local communication section 150. The local communication section 150 can be embodied as a wireless communication unit such as an IrDA unit or a blue-tooth communication unit, or a wired communication unit, such as an RS-232c unit.

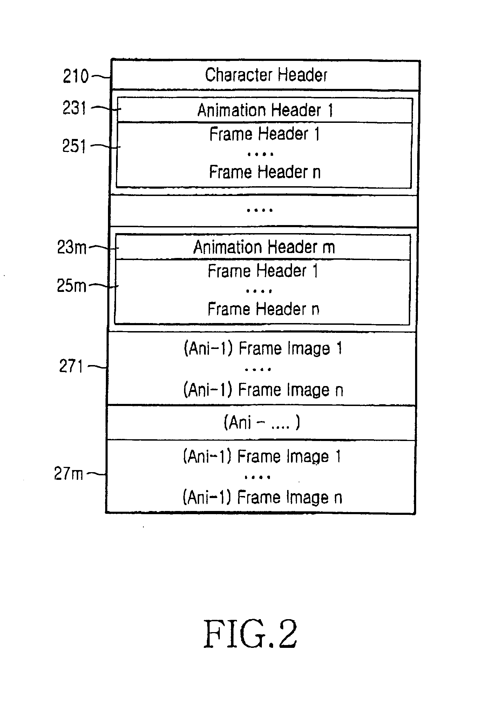

The wireless terminal having the above structure includes character files stored in the memory 113. The structure of the character file is shown in FIG. 2.

Referring to FIG. 2, the character file according to the an embodiment of the present invention includes headers and images. The headers include a character header 210, m animation headers 231 to 23m, and n frame headers 251 to 25m corresponding to the m animation headers 231 to 23m. The character header 210 is an information header for defining a character type and the number of animations, in which the number of animations is the number of characters expressed corresponding to the character type. The animation headers 231 to 23m are information headers for defining the sort of animations and the number of frame images, in which if the number of the frame images is "1", a just one-cut image is displayed and if the number of the frame images is at least "2", the animation is displayed. The frame headers 251 to 25m are information headers for defining frame information and the number of frame images forming the animation in which the number of the frame headers 251 to 25m corresponds to the number of frame images of the animation headers 231 to 23m. That is, the number (m) of the animation headers corresponds to the number of animations in the character header 210, and the number (n) of the frame headers corresponds to the number of animation headers. In addition, if the number of character images 271 to 27m corresponds to the number of the animation headers, the number of character images corresponding to the animation headers matches with the number of frame headers.

Therefore, the memory 113 stores the character files shown in FIG. 2 according to the character types of the character files, such as avatar items, avatar houses and back-sceneries. In addition, each character file includes a header section having a character header, an animation header and a frame header and an image block, in which the number of the image blocks corresponds to the number of animation headers.

The character header 210 includes information about an ID for the character type and the number of animations corresponding to the character type. The animation refers to a specific image displayed in the wireless terminal and the number of animations signifies the sort of animations which can be displayed in the wireless terminal according to the character type. For example, if the character type is of the avatar type and the number of avatar images for expressing the avatar is m, the number of animations for the avatar character is m. The animation headers 231 to 23m define the sort of the animations forming the character type and the number of frame images of the image block for displaying the sort of the animations. That is, the number of image blocks for displaying the animation includes at least one frame image and the number of frame images corresponds to the number of frames forming the image block. For instance, if the image block for displaying the animation includes n frame images, the number of frame headers is n. The frame headers 251 to 25m include information about the frame images displayed in the form of the animation. That is, the frame headers 251 to 25m include information about the display position and the display interval of the frame images forming the animation.

Accordingly, the character file includes character types, such as the avatar, the item, the avatar house, and the back-scenery, in which at least one animation header is included in one character header. The animation header has a structure capable of accommodating the frame headers having information related to at least one frame image for the image block to be displayed in the form of the animation.

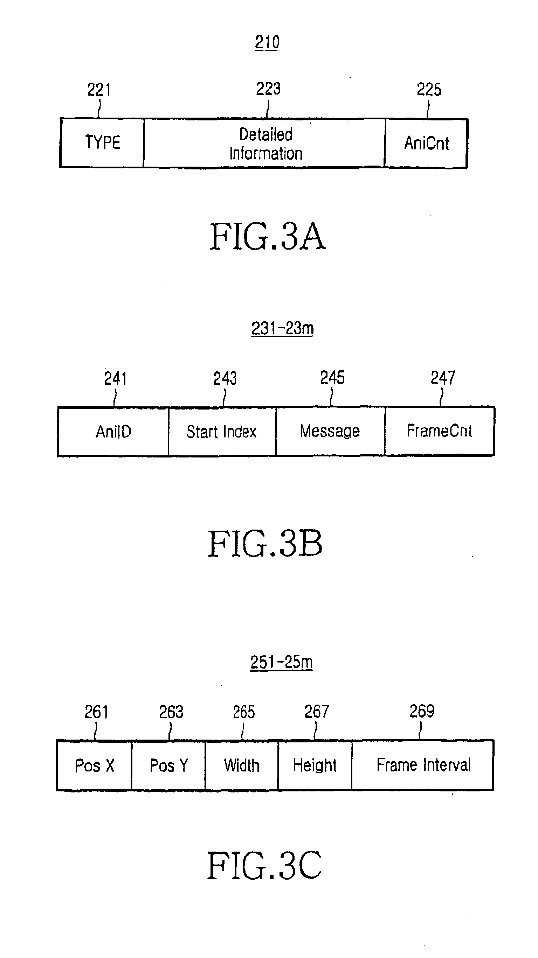

FIG. 3A is a diagram illustrating the structure of the character header 210 shown in FIG. 2, FIG. 3B is a view illustrating a structure of animation headers 232 to 23m shown in FIG. 2, and FIG. 3C is a view illustrating a structure of frame headers 251 to 25m shown in FIG. 2.

Referring to FIG. 3A, the character header 210 is an information header regarding a character type of the character file field, detailed information for the character type, and an animation counter for the character type. That is, the character header 210 includes a character type field 221, a detailed information field 223, and an animation counter field 225. According to an embodiment of the present invention, the character type field 221 includes an avatar type, an avatar house type, an item type, and a back-scenery type. The avatar type represents a memory area for the avatar, the avatar house type represents a memory area for the avatar house. Herein, the avatar house is a screen image of the wireless terminal in a waiting mode and includes a combination of the back-scenery image and items. The item type represents a memory area for the items used in the avatar house. Herein, the items comprise items included in the avatar house and items which are not included in the avatar house. The back-scenery type represents a memory area related to back-sceneries used for the avatar house. The back-sceneries consist of back-sceneries included in the avatar house and back-sceneries which are not included in the avatar house. The character type field 221 is defined as Table 1.

**Table 1**

| TYPE | Description |
|---|---|
| AVATAR_TYPE | Memory field for avatar (character) |
| AVATARHOUSE_TYPE | Memory field for avatar house(item + back-scenery) |
| ITEM_TYPE | Memory field for item used in avatar house |
| BACK_TYPE | Memory field for back-scenery used in avatar house |

In addition, the detailed information field 223 for the character type is an area for storing text data used for explaining the character type field 221. If the character type is of the avatar type, information about the avatar, such as an avatar ID, an avatar name and an emotional state, is stored in the detailed information field 223. If the character type is of the avatar house type, information about the avatar house, such as a name of the avatar house, is stored in the detailed information field 223. In addition, if the character type is of the item type, information about the items, such as a name of the item and a function of the name, is stored in the detailed information field 223. If the character type is of the back-scenery type, information about the back-scenery used for the avatar house, such as a name of the back-scenery, is stored in the detailed information field 223. Text data stored in the detailed information field 223 are shown in Table 2.

**Table 2**

| TYPE | Description |
|---|---|
| AVATAR_TYPE | Information values for avatar (character), such as ID, name, emotional value, etc |
| AVATARHOUSE_TYPE | Information values for avatar house (name) |
| ITEM_TYPE | Information about item used in avatar house (name, functional description) |
| BACK_TYPE | Information about back-scenery used in avatar house (name, etc) |

In addition, the animation counter field is used for storing the number of image blocks used for displaying the animation. If the character type is of the avatar type, the number of image blocks for displaying the corresponding avatar (emotional expressions, events, states of messages) is stored in the animation counter field. If the character type is of the avatar house type, the number of image blocks (the number of items and back-sceneries) for displaying the avatar house is stored in the animation counter field. In addition, if the character type is of the item type, the number of items, which are individually displayed or displayed with the avatar house, is stored in the animation counter field. If the character type is of the back-scenery type, the number of back-sceneries, which are individually displayed or displayed with the avatar house, is stored in the animation counter field. Table 3 shows the animation counter field 225 for the character type.

**Table 3**

| TYPE | Description |
|---|---|
| AVATAR_TYPE | Number of motions of avatar (emotional motion, event motion, etc) |
| AVATARHOUSE_TYPE | Item number + back-scenery number to be used in avatar house |
| ITEM_TYPE | Number of items to be used in avatar house |
| BACK_TYPE | Number of back-sceneries to be used in avatar house |

FIG. 3B illustrates the structure of the animation headers 231 to 23m of the character file. The animation headers 231 to 23m of the character file include an animation ID field 241, a start index field 243, a message field 245, and a frame counter field 247. An ID for an image block displayed in the form of the animation is stored in the animation ID field 241. An address used for finding a start point of the frame image is stored in the start index field 243. If the image is not compressed, the start index field 243 may not be used. Text information for the animation is stored in the message field 245. Text which can be stored in the message field 245 are shown in Table 4. The number of frame images (the number of frame headers) of the image block displayed in the form of an animation is stored in the frame counter field 247. At this time, the image block displayed in the form of the animation may include at least two frame images. In a case of just one-cut image, "1" (n=1) is stored in the frame counter field 247.

**Table 4**

| TYPE | Description |
|---|---|
| AVATAR_TYPE | Comment from avatar according to action of avatar |
| AVATARHOUSE_TYPE | -Text message generated when item used in avatar house performs function -Text message for representing function and effect of back-scenery |
| ITEM_TYPE | Text message generated when item used in avatar house performs function |
| BACK_TYPE | Text message for representing function and effect of back-scenery |

FIG. 3C shows the structure of frame headers 251 to 25m. The frame headers 251 to 25m include position information and frame interval information of a display section 140 of the wireless terminal. Referring to FIG. 3C, a pos X field 261 and a pos Y field 263 are information representing a start point (relative coordinate) of an image displayed in the display section 140, and a width field 265 and a height field 267 are information representing a size of the frame image. Accordingly, the display position of the frame image is determined according to the pos X field 261, the pos Y field 263, the width field 265 and the height field 267. In addition, a frame interval field 269 represents a time interval between two frame images when the animation image includes at least two frame images. In a case of a frame header of a final frame image, "0" is stored in the frame interval field 269. In addition, in a case of a just one-cut image, "0" is stored in the frame interval field 269.

The number of frame headers having the above structure shown in FIG. 3C is determined based on the number stored in the frame counter field 247 of the animation headers 231 to 23m. For instance, if the number of the frame images forming the image block of the animation header 231 is "10", the number of frame headers 251 is "10". In addition, if the number of the frame images forming the image block of the animation header 232 is "15", the number of frame headers 252 is "15". Therefore, the number (n) of the frame headers 251 to 25m depends on the value of the frame counter field 247 stored in the animation headers 231 to 231m.

According to an embodiment of the present invention, the number of the frame headers corresponds to the number of frame images of the image block for displaying the animation. In this case, positions of the frame images are changed when displaying images in the display section 140, thereby displaying the animation. However, it is also possible to preselect the positions of the images when forming the frame images. In this case, although the frame images are displayed in a fixed position of the display section 140, the display positions of the images are changed within a display region for the frame images, so the images can be displayed in the form of the animation. The frame images used for displaying the character images can be formed through any one of the above manners.

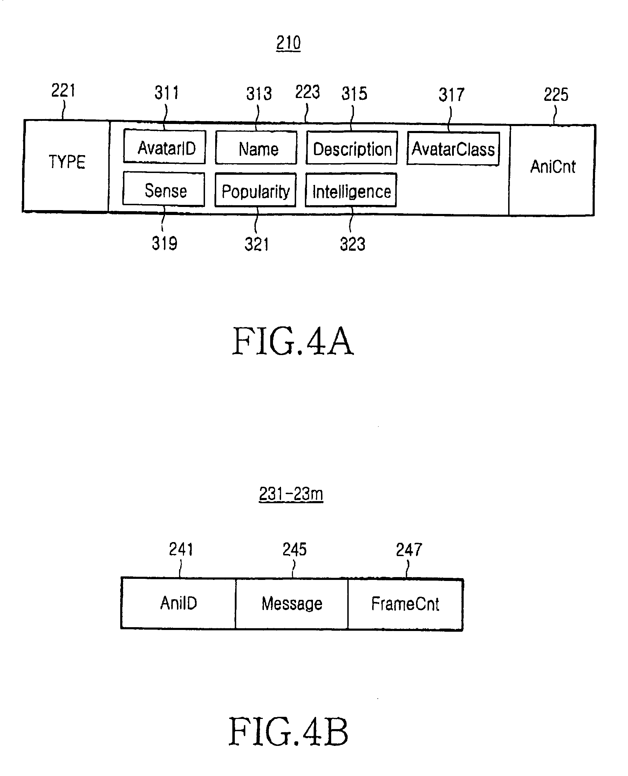

Hereinafter, header information of the avatar type stored in the character structure memory will be described. FIGS. 4A to 4C are views illustrating the structure of the character file (avatar file) when the character type is of the avatar type, in which FIG. 4A shows the structure of the avatar header and FIG. 4B shows the structure of the avatar animation header.

Referring to FIG. 4A, an avatar type ID is stored in a type field 221. In addition, a detailed information field 223 includes fields for an avatar ID 311, an avatar name 313, a description 315, an avatar class 315, and specific avatar information. An emotional state of the avatar can be displayed in the specific avatar information field. According to an embodiment of the present invention, an emotional information field includes a sense field 319 and an intelligence field 323. That is, if the character is the avatar, the emotional state of the wireless terminal is classified into a sense field 319, a popularity field 321 and an intelligence field 323, which store a sense index, a popularity index, and an intelligence index, respectively. The above indices are converted into emotional values of the avatar, and the emotional values of the avatar are represented with specific motions of the avatar. Table 5 explains the structure of the avatar header according to an embodiment of the present invention. In the avatar header shown in FIG. 4A, the type field 221, the animation counter field 225, and the avatar ID field 311 are mandatory fields. In addition, the detailed information field 223, the name field 313, the description field 315, the avatar class field 317, and the emotional field including the sense field 319, the popularity field 321, and the intelligence field 323 are optional fields.

According to an embodiment of the present invention, the wireless terminal includes four avatars, such as Trollis, Lucy, Bat-cat, and Bird. However, this embodiment of the present invention does not limit the number of the avatars. In addition, the avatar header as shown in FIG. 4A is prepared for each avatar. At this time, the avatar type is recorded in the type field 221 of each avatar header. In addition, dedicated avatar information is recorded in the avatar ID field 311, the avatar name field 313, the description field 315 and the avatar class field 317 of the detailed information field 223.

**Table 5**

| Field | Optional | Description |
|---|---|---|
| AvatarID | | Various avatar IDs (e.g. : 0; Trollis, 1; Lucy, 2; Batcat, 3; Bird |
| Name | 0 | Avatar name (e.g. : Trollis) |
| Description | 0 | Description about avatar (e.g. : monster with outrageous nature in northern Europe) |
| AvatarClass | 0 | Sort of avatar (e.g. : Monster) |
| Emotion | 0 | CDMA-Emotion, GSM-Sense/Popularity/Intelligence Current emotional value of avatar |

Referring to Table 5, avatar IDs corresponding to four avatars are recorded in the avatar ID field 311. Herein, the avatar is assumed to be a Trollis. In this case, "0" is recorded in the avatar ID field 311. The name (Trollis) of the avatar corresponding to the avatar ID is recorded in the avatar name field 313 and description for the avatar is recorded in the description field 315. In a case of Trollis, "a monster with outrageous nature in northern Europe" is recorded in the description field 315. The sort or species of the avatar is recorded in the avatar class field 317. In a case of Trollis, "monster" is recorded in the avatar class field 317. In addition, numerical values according to use of the wireless terminal are recorded in the sense field 319, the popularity field 321 and the intelligence field 323.

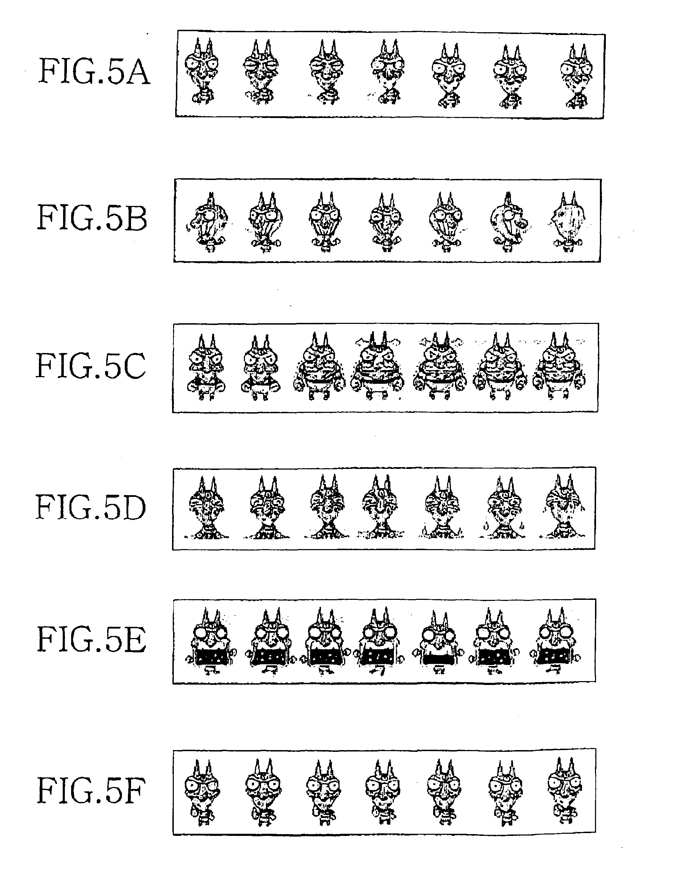

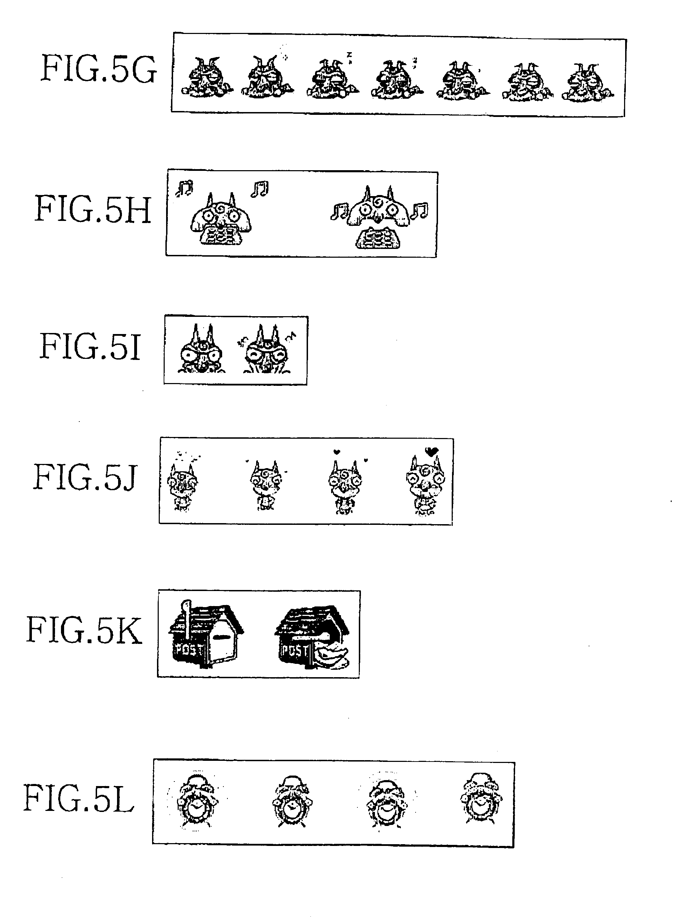

The number of animations for the corresponding avatar is recorded in the animation counter field 225 of the avatar head as shown in FIG. 4A, in which the number of the animation headers corresponds to the number of the animations. FIG. 4B illustrates the structure of the avatar animation header. In addition, FIGS. 5A to 5L are views illustrating examples of avatar animations when the avatar is a Trollis according to one embodiment of the present invention. If the avatar animations are formed as shown FIGS. 5A to 5L, the number of avatar animations is 12 (m=12 and animation counter=12). In this case, the number of animation headers as shown in FIG. 4B is also 12.

Referring to FIGS. 4B and 5A to 5L, seven animations as shown in FIGS. 5A to 5G are used for representing the emotional state of the wireless terminal, and five animations as shown in FIGS. 5H to 5L are used for indicating events of the wireless terminal. If the animations shown in FIGS. 5A to 5L are employed, the animation ID 241 includes 0 to 12. In addition, if the animations shown in FIGS. 5A to 5L are compressed, a position for searching the start frame of the image block corresponding to the animation ID 241 is recorded in the start index field 243. However, according to an embodiment of the present invention, it is assumed that the animation images are non-compressed data, such as bit-map data, so the start index field 243 is not used. Messages displayed in the display section 140 together with the image when displaying the animation is stored in the message field 245 of the animation head. Herein, the messages are displayed while being confined by a speech balloon. If the animations representing the emotional states as shown in FIGS. 5A to 5G are displayed, the contents of the messages are displayed. In addition, if animations representing the events of the wireless terminal as shown in FIGS. 5H to 5L are displayed, the message field 245 is selectively displayed or not displayed. According to an embodiment of the present invention, in a case of the animations representing the events of the wireless terminal, the message field 245 is not displayed.

In addition, the number of the frame images forming the image block for the animation is recorded in the frame counter field 247. For example, in a case of the animation as shown in FIG. 5A, a value of the frame counter field 247 is 7 (framecnt=7), so seven frame headers having the structure as shown in FIG. 3C are required. In addition, in a case of the animation as shown in FIG. 5H, a value of the frame counter field 247 is 2 (framecnt=2), so two frame headers having the structure as shown in FIG. 3C are required.

Table 6 is prepared in order to explain the structure of the animation header when the animations as shown in FIGS. 5A to 5L are formed.

**Table 6**

| Category | Ani ID | Message | Framecnt | Note | |
|---|---|---|---|---|---|
| | | | | Description | FIG |
| Emotional expression | 0 | Me? Nothing special.. | 7 | Normal | 5a |
| | 1 | Oh! Today is very good.. | 7 | Happy | 5b |
| | 2 | Hell, I feel angry.. | 7 | Angry | 5c |
| | 3 | Oh my god, it's really getting harder to me... | 7 | Sad | 5d |
| | 4 | Oops, -- | 7 | Embarrassed | 5e |
| | 5 | Aaaa∼ing | 7 | Shy | 5f |
| | 6 | Let's run through the rough field! Oh yeah∼ | 7 | Special | 5g |
| Event notification | 7 | | 2 | Incoming call | 5h |
| | 8 | | 2 | Popup window | 5i |
| | 9 | | 9 | Power on/off | 5j |
| | 10 | | 2 | SMS incoming | 5k |
| | 11 | | 4 | Schedule alarm | 5l |

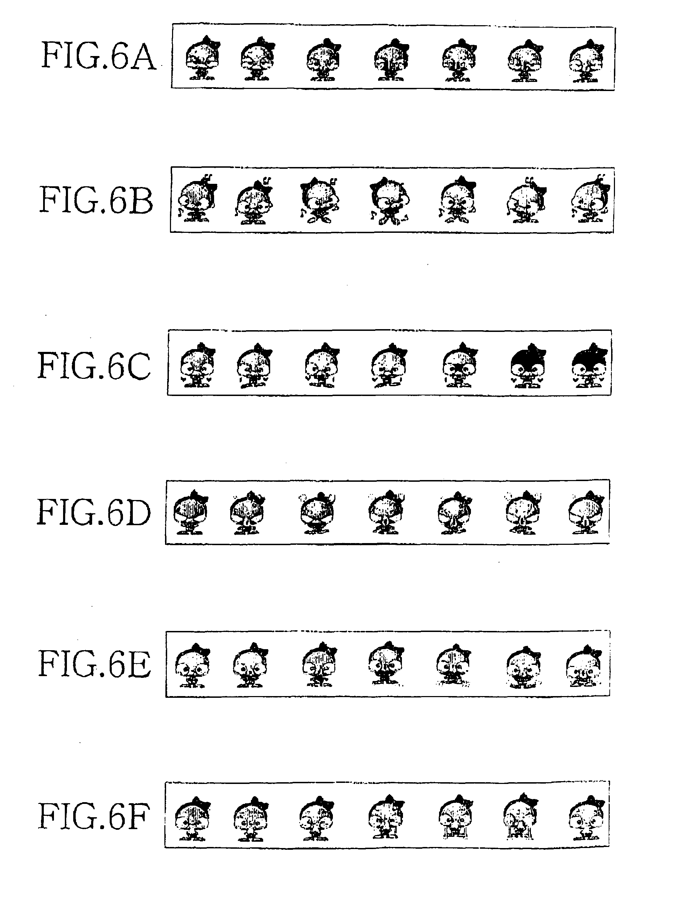

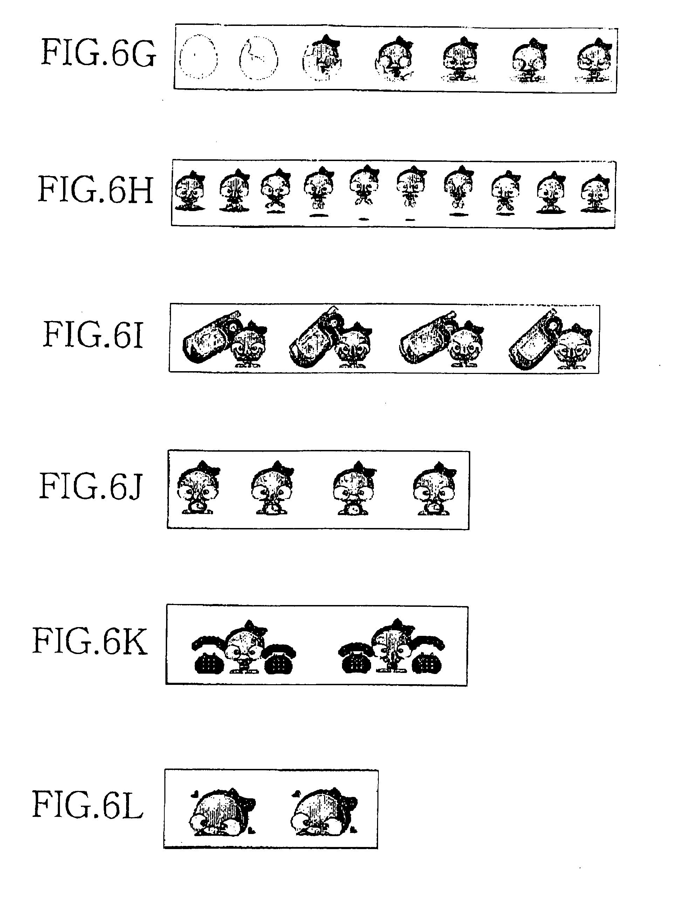

In addition, FIGS. 6A to 6L are diagrams illustrating examples of avatar animations according to another embodiment of the present invention, in which the avatar is "Bird". If the avatar animations are prepared as shown in FIGS. 6A to 6L, the number of avatar animations is 12 (m=12 and anicnt=12). In this case, twelve animation headers having the structure as shown in FIG. 4B are provided. Avatar animations shown in FIGS. 6A to 6H are used for representing the emotional state of the wireless terminal, and avatar animations as shown in FIGS. 6I to 6L are used for indicating events of the wireless terminal. The avatar file structure of the avatar animations shown in FIGS. 6A to 6L can be formed in the same manner as the avatar file structure of the avatar animations shown in FIGS. 5A to 5L.

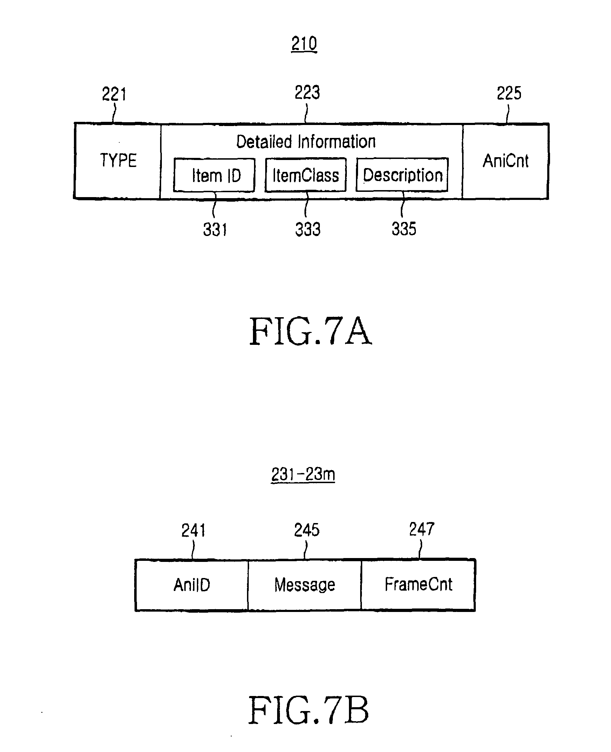

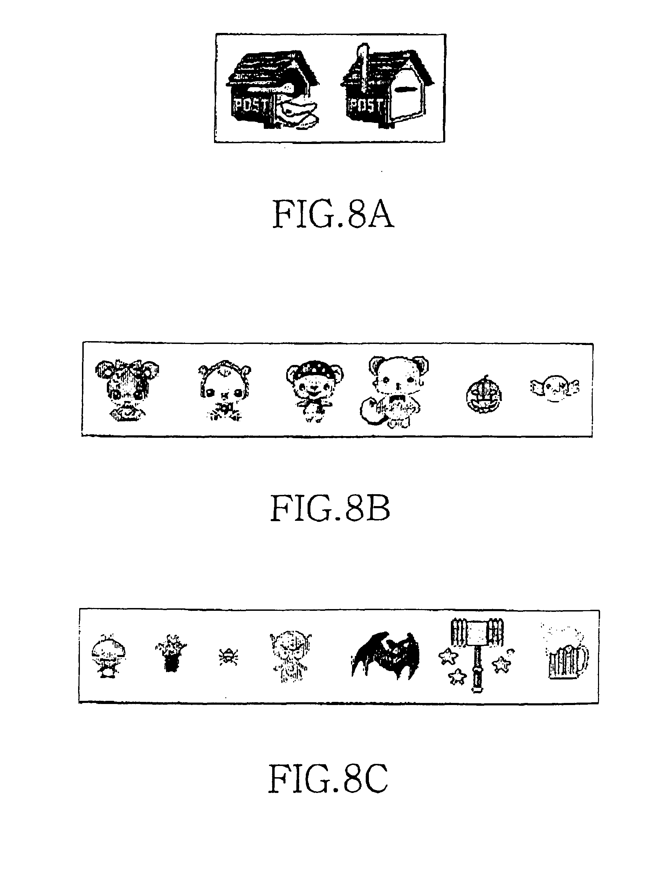

Hereinafter, the description will be made in relation to header information of the item type stored in the character structure memory. FIGS. 7A and 7B are diagrams illustrating header structures of character files (item files) when the character type is of the item type, in which FIG. 7A illustrates the structure of the item header and FIG. 7B illustrates the structure of the animation header. FIGS. 8A to 8C are diagrams illustrating the item images which are stored in the character image memory of the memory 113. As shown in FIG. 8A, the item image includes at least two frame images so that the item image can be displayed in the form of the animation. In addition, as shown in FIGS. 8B and 8C, the item image can be embodied in the form of the just one-cut image (non-animation image).

Referring to FIG. 7A, the item type ID is recorded in the type field 221. In addition, the detailed information field 223, which displays character information, includes an item ID field 331, an item class field 333, and an item description field 335. Table 7 is prepared in order to explain the structure of the item header and Table 8 is prepared in order to explain examples of data of items as shown in FIGS. 8A to 8C, which are recorded in the detailed information field 223 shown in FIG. 7A. In the item header as shown in FIG. 7A, the type field 221, the animation counter field 225, the item ID field 311 and the item class field 333 are mandatory fields, and the item description field 335 is an optional field.

**Table 7**

| Field | Optional | Description |
|---|---|---|
| Item ID | | Various item IDs (e.g. : mail box, etc) |
| Item Class | | Sort of items (e.g. : 0; non-functional item, 1; functional item (e.g.; message reception confirmation) |
| Description | O | Description about item (e.g. : item capable of recognizing message reception in avatar house) |

**Table 8**

| ID | Description | Class |
|---|---|---|
| 0 | Mail box | 1 |
| 1 | Blue mouse | 0 |
| 2 | White bear | 0 |
| 3 | Red-capped bear | 0 |
| 4 | Cute mouse | 0 |
| 5 | Pumpkin head | 0 |
| 6 | Fat bird | 0 |
| 7 | Dull chick | 0 |
| 8 | Flowers | 0 |
| 9 | Spider | 0 |
| 10 | Cute superman | 0 |
| 11 | Bat | 0 |
| 12 | Star Hammer | 0 |
| 13 | Beer | 0 |

Referring to Table 7, an item ID is recorded in the item ID field 331. In addition, the sort of items corresponding to the item ID is recorded in the item class field 333. The items are classified into simple items (non-functional items) and functional items. That is, the item shown in FIG. 8A includes a plurality of frame images in such a manner that the item can be displayed when a specific event (herein, an incoming call alarm event) is generated. However, the items shown in FIGS. 8B and 8C are non-functional items, such as avatar houses, which are used for decorating the wireless terminal regardless of the operation of the wireless terminal. The non-functional items shown in FIGS. 8B and 8C may comprise just one-cut frame image or at least two frame images which can be displayed in the form of the animation. According to an embodiment of the present invention, it is assumed that the non-functional items comprise just one-cut fame image. In addition, the item name and item description corresponding to the item ID are recorded in the description field 335 shown in FIG. 7A. For example, the item shown in FIG. 8A can be described in the description field 335 as an item combined with the avatar house so as to indicate message reception. Table 8 shows the detailed information field 223 of the item header for the items shown in FIGS. 8A to 8C. Herein, the item ID "0" indicates a mail box and represents a functional item. In addition, the item IDs 1 to 13 have their own names as shown in Table 8, and represent the non-functional items. FIG. 8B shows the items corresponding to item IDs 1 to 7, and FIG. 8C shows the items corresponding to item IDs 8 to 13. Accordingly, if the wireless terminal includes the item images as shown in FIGS. 8A to 8C, the number "14" representing 14 items is recorded in the animation counter field 225 of the item header as shown in FIG. 7A.

FIG. 7B shows the structure of the item animation header.

If the item animations are prepared as shown in FIGS. 8A to 8C, the number of the animations is 14 (m=14 and anicnt=14). In this case, fourteen item animation headers having the structure as shown in FIG. 7B are provided. At this time, the item corresponding to the item ID "0" as shown in FIG. 8A is a functional item including two frame images, so "2" is recorded in the frame counter field 247 shown in FIG. 7B. In addition, the items corresponding to the item IDs 1 to 13 as shown in FIGS. 8B and 8C are non-functional items including the just one-cut image frame, so "1" is recorded in the frame counter field 247 shown in FIG. 7B. Therefore, two frame headers must be provided in relation to the animation header of the mail box item shown in FIG. 8A, and one frame header is required in relation to the animation headers for the thirteen items shown in FIGS. 8B and 8C. Table 9 shows the structure of the item header for the item images shown in FIGS. 8A to 8C.

**Table 9**

| AniID | Message | Description | Class |
|---|---|---|---|
| 0 | No message/new message | Mail box | 2 |
| | // | Blue mouse | 1 |
| | // | White bear | 1 |
| | // | Red-capped bear | 1 |
| | // | Cute mouse | 1 |
| | // | Pumpkin head | 1 |
| | // | Fat bird | 1 |
| | // | Dull chick | 1 |
| | // | Flowers | 1 |
| | // | Spider | 1 |
| | // | Cute superman | 1 |
| | // | B at | 1 |
| | // | Star Hammer | 1 |
| | // | Beer | 1 |

In addition, according to an embodiment of the present invention, the above animation images are assumed as non-compressed data, such as bit-map data, so the start index field 243 is not used. Accordingly, the start index field 243 is not used in the animation header structure as shown in FIG. 7B.

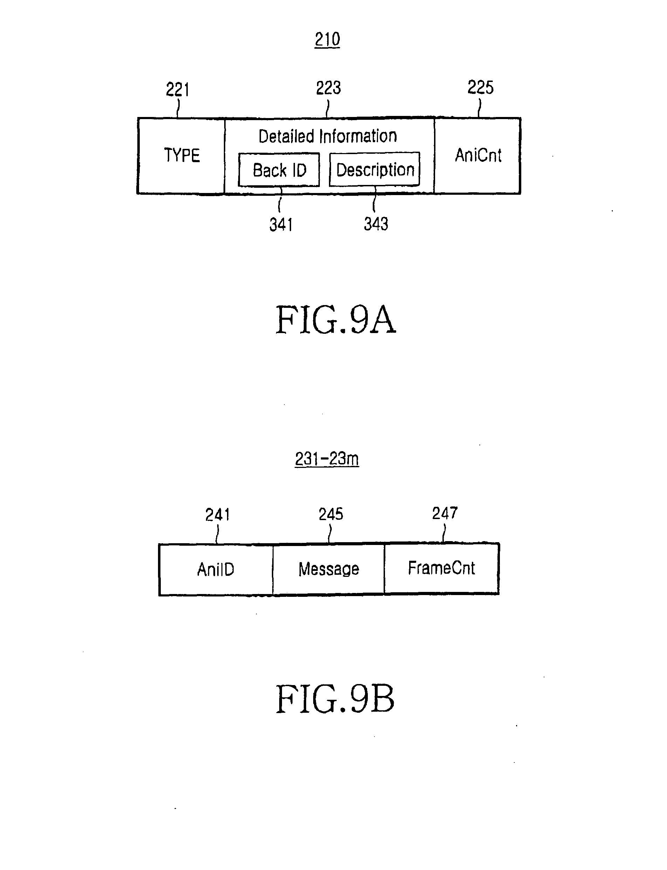

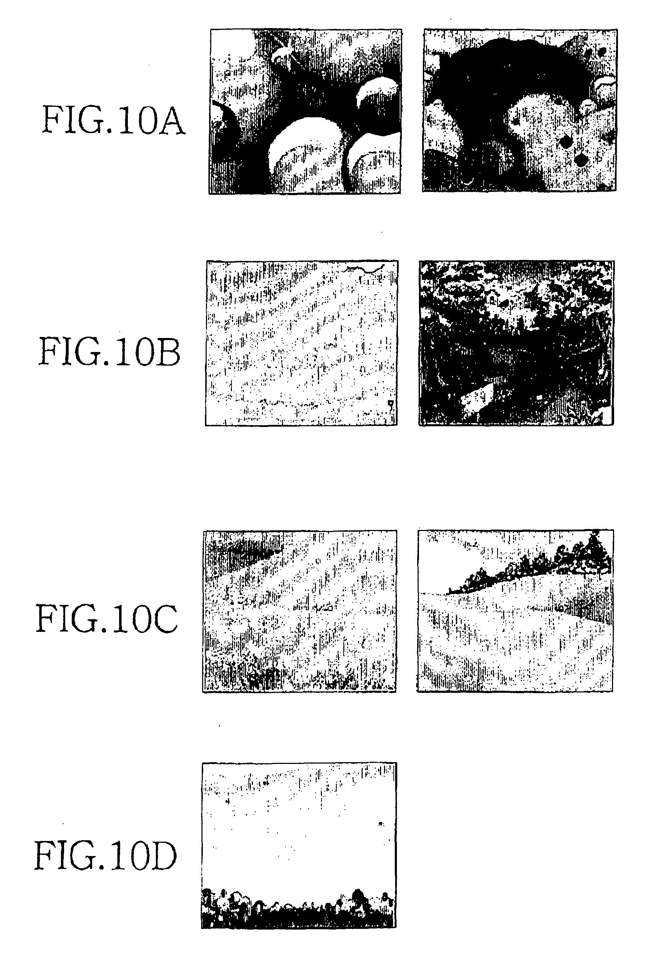

Hereinafter, header information of the back-scenery type stored in the character structure memory will be described. FIGS. 9A and 9B are diagrams illustrating structures of character files (back-scenery files) when the character type is of the back-scenery type, in which FIG. 9A illustrates the structure of the back-scenery header and FIG. 9B illustrates the structure of the back-scenery animation header. FIGS. 10A to 10D are views illustrating the back-scenery images which are stored in the character image memory of the memory 113. The back-scenery image may include at least two frame images so that the back-scenery image can be displayed in the form of the animation. In addition, as shown in FIGS. 10A to 10D, the back-scenery image can be embodied in the form of the just one-cut image (non-animation image).

Referring to FIG. 9A, the back-scenery type ID is recorded in the type field 221. In addition, the detailed information field 223, which displays character information, includes a back-scenery ID field 341 and a back-scenery description field 343. Table 10 is prepared in order to explain the structure of the back-scenery header and Table 11 is prepared in order to explain examples of data of the back-sceneries as shown in FIGS. 10A to 10D, which are recorded in the detailed information field 223 shown in FIG. 9A. In the back-scenery header as shown in FIG. 9A, the type field 221, the animation counter field 225, and the back-scenery ID field 341 are mandatory fields, and the back-scenery description field 343 is an optional field.

**Table 10**

| Field | Optional | Description |
|---|---|---|
| Item ID | | Various back-scenery IDs (e.g. : water drop, etc) |
| Description | O | Description about back-scenery (e.g. : autumn scenery) |

**Table 11**

| ID | Description |
|---|---|
| 0 | Water drop |
| 1 | Cake |
| 2 | Stock farm |
| 3 | Mountain path |
| 4 | Field |
| 5 | Hill |
| 6 | Flower garden |

Referring to Table 10, a back-scenery ID is recorded in the back-scenery ID field 341. In addition, the back-scenery name and back-scenery description corresponding to the back-scenery ID are recorded in the back-scenery description field 343. The back-scenery may include a plurality of frame images displayed in the form of the animation or may include a just one-cut frame image as shown in FIGS. 10A to 10D. FIGS. 10A to 10D illustrate the back-sceneries corresponding to back-scenery IDs 0 to 6. If the wireless terminal includes the back-scenery images as shown in FIGS. 10A to 10D, the number "7" representing seven back-scenery images is recorded in the animation counter field 225 of the back-scenery header as shown in FIG. 9A.

FIG. 9B shows the structure of the back-scenery animation header.

If the back-scenery animations are prepared as shown in FIGS. 10A to 10D, the number of the animations is 7 (m=7 and anicnt=7). In this case, seven back-scenery animation headers having the structure as shown in FIG. 9B are provided. At this time, since the back-scenery image includes the just one-cut frame image, "1" is recorded in the frame counter field 247 shown in FIG. 9B. Therefore, only one frame header is provided in relation to the animation headers of the seven back-scenery images shown in FIGS. 10A to 10D. Table 12 shows the structure of the back-scenery header for the back-scenery images shown in FIGS. 10A to 10D.

**Table 12**

| AniID | Message | Description | FrameCnt |
|---|---|---|---|
| 0 | // | Water drop | 1 |

In addition, according to an embodiment of the present invention, the above animation images are assumed to be non-compressed data, such as bit-map data, so the start index field 243 is not used. Accordingly, the start index field 243 is not used in the animation header structure as shown in FIG. 9B.

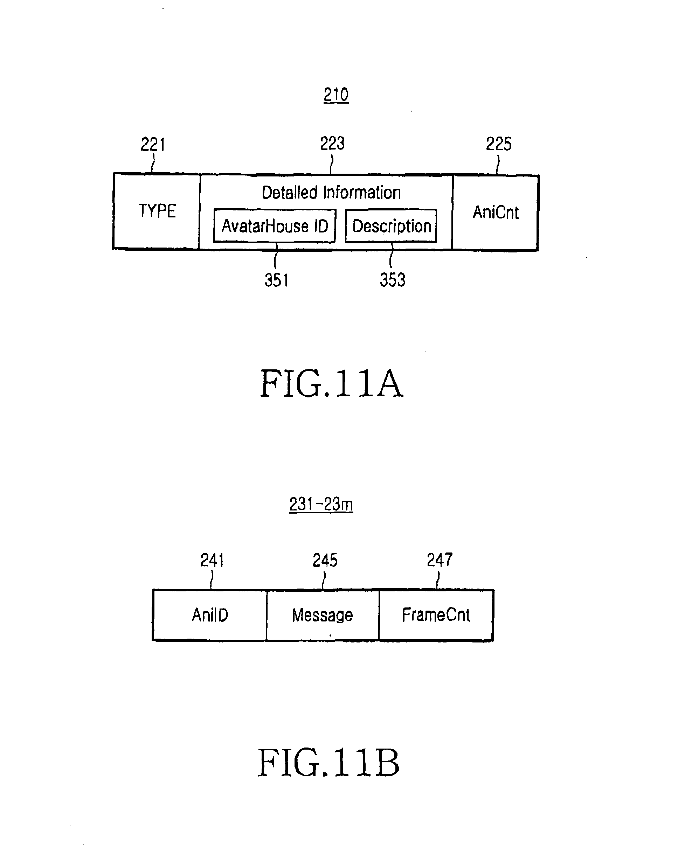

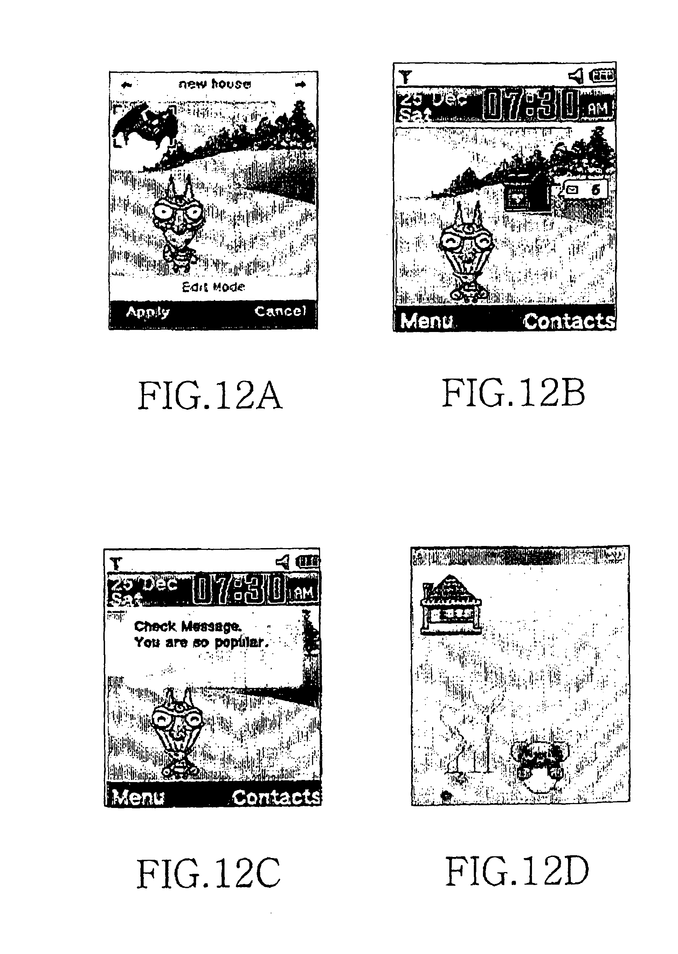

Hereinafter, header information of the avatar house type stored in the character structure memory will be described. FIGS. 11A and 11B are views illustrating structures of character files (avatar house files) when the character type is of the avatar house type, in which FIG. 11A illustrates the structure of the avatar house header and FIG. 11B illustrates the structure of the avatar house animation header. FIGS. 12A to 12D are views illustrating the avatar house images which are stored in the character image memory of the memory 113. The avatar house image may include the back-scenery image and the item image or may include the back-scenery image, the item image and the avatar image. In addition, the avatar house image can be embodied by using the back-scenery image only. The following description will be focused on the avatar house image as shown in FIG. 12A. The avatar house image shown in FIG. 12A includes the back-scenery image combined with the item image and the avatar image.

Referring to FIG. 11A, the avatar house type ID is recorded in the type field 221. In addition, the detailed information field 223, which displays character information, includes an avatar house ID field 351 and an avatar house description field 353. Table 13 is prepared in order to explain the structure of the avatar house header for the avatar house image as shown in FIG. 12A. In the avatar house header as shown in FIG. 11A, the type field 221, the animation counter field 225, and the avatar house ID field 351 are mandatory fields, and the avatar house description field 353 is an optional field.

**Table 13**

| Field | Optional | Description |
|---|---|---|
| AvatarHouse ID | | Avatar house ID |
| Description | 0 | Description about avatar house |

Referring to Table 13, the avatar house ID is recorded in the avatar house ID field 351. In addition, the avatar house name and avatar house description corresponding to the avatar house ID are recorded in the avatar house description field 353. As shown in FIGS. 12A to 12D, the avatar house image may include the back-scenery image combined with the avatar image and/or plural item images. The avatar image and/or the item image may include a plurality of frame images displayed in the form of the animation. FIGS. 12A to 12D illustrate the avatar house images corresponding to avatar house IDs 0 to 3. If the wireless terminal includes the avatar house image as shown in FIG. 12A, the number "2" is recorded in the animation counter field 225 of the avatar house header as shown in FIG. 11A. At this time, since the avatar image used for the avatar house image employs the avatar selected by the user, the avatar image is not separately recorded in the avatar house image. If the avatar is not used, the avatar is not displayed in the avatar house image.

FIG. 11B shows the structure of the avatar house animation header.

In a case of the avatar house image shown in FIG. 12A, the number of the animations is 2 (m=2 and anicnt=2). In this case, two avatar house animation headers having the structure as shown in FIG. 11B are provided. At this time, since the avatar house image includes the just one-cut frame image, "1" is recorded in the frame counter field 247 shown in FIG. 11B. Therefore, only one frame header is provided in correspondence with the animation header of the avatar house image shown in FIG. 12A. Table 14 shows the structure of the avatar house header for the avatar house image shown in FIG. 12A.

**Table 14**

| AniID | Message | Description | FrameCnt |
|---|---|---|---|
| 0 | | Back-scenery (hill) | 1 |
| 1 | | Bat item | 1 |

In addition, according to an embodiment of the present invention, the above animation images are assumed to be non-compressed data, such as bit-map data, so the start index field 243 is not used. Accordingly, the start index field 243 is not used in the animation header structure as shown in FIG. 11B.

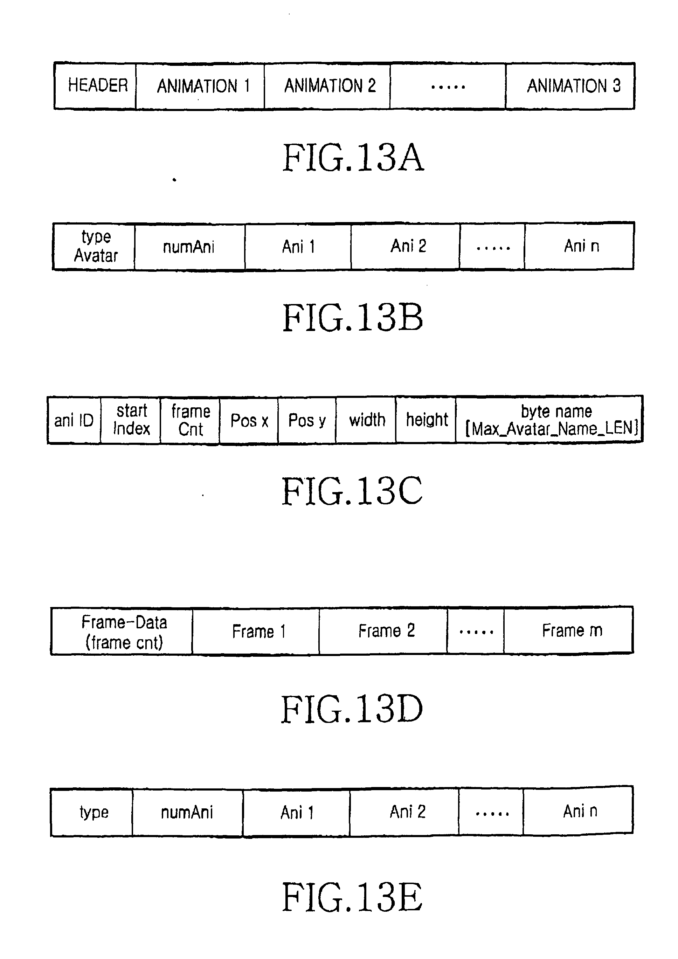

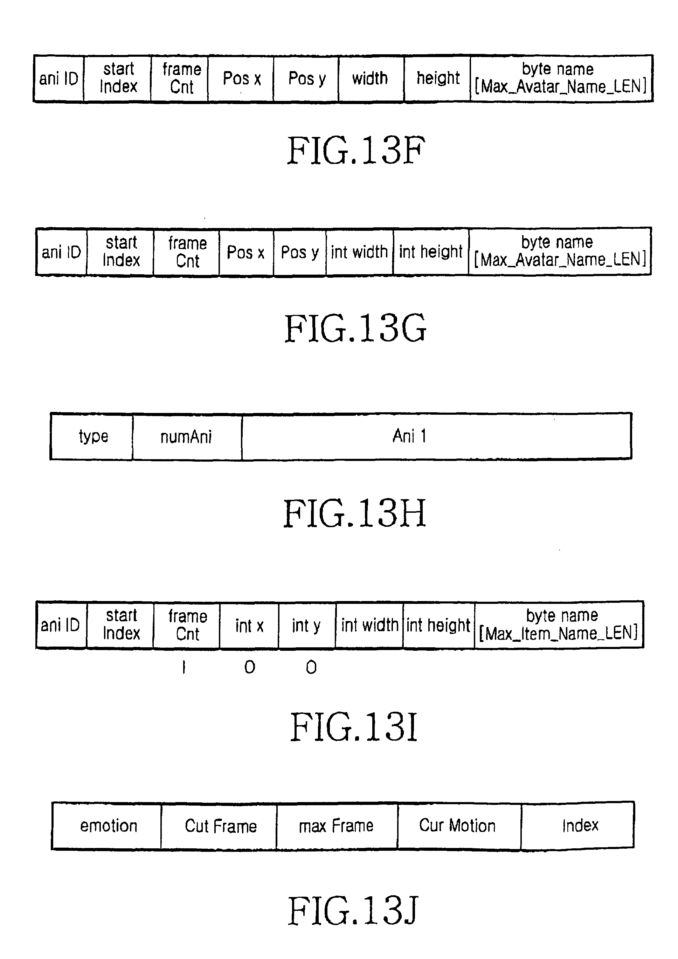

All characters (avatars, items, back-sceneries, and avatar houses) have the same character file structure as described above. That is, the character files have the same character header, animation header and frame header. However, there are great differences between the avatar character and other characters. That is, the avatar character includes a plurality of frames which can be displayed in the form of the animation image. However, the item, avatar house, and back-scenery characters include the just one-cut frame image so that they are displayed in the form of a still image. Thus, the avatar character may form a structure different from structures of other characters. In the meantime, although the above description has been made in relation to bit-map data, it is noted that the character files shown in FIGS. 13A to 13J are compressed image data.

FIGS. 13A to 13J are diagrams illustrating character file structures of the avatars, avatar houses and items stored in the character memory according to another embodiment of the present invention. Hereinafter, the character file structures of the avatars, avatar houses and items according to another embodiment of the present invention will be described with reference to FIGS. 13A to 13J.

FIGS. 13A to 13J illustrate the structures of the avatars, avatar houses and items. The avatar, the avatar house and the item have the character file structure as shown in FIG. 13A. As shown in FIG. 13A, the characters (avatars, avatars house, items, etc) of the present invention have the character file structure stored in the memory 113 in the form of a file. Herein, the same header is applied to all characters and animation data are binary data obtained by compressing frames forming the animation.

FIGS. 13B to 13D are diagrams illustrating the structure of the avatar file, in which FIG. 13B illustrates the header structure of the avatar file, FIG. 13C illustrates header fields for animations Ani 1 to Ani n, and FIG. 13D illustrates the structure of images for the animations Ani 1 to Ani n. The avatar data file stored in the memory 113 includes an avatar animation structure and consists of compressed image data corresponding to the avatar animation structure. In addition, a plurality of avatar data files can be provided.

FIG. 13B illustrates the header structure when the character is the avatar. Referring to FIG. 13B, a type avatar field represents the type of the character. Herein, the type avatar field is an enum constant indicating the avatar. A "numAni" field represents the number of animations. As mentioned above, if eight emotional animations and four event animations are provided, "numAni" is 12. In addition, Ani 1 to Ani n fields represent the structure of the animations. In this case, the number of Ani 1 to Ani n is 12.

FIG. 13C illustrates a header for each Ani, which defines fields for Ani 1 to Ani n. Referring to FIG. 13C, an ani ID field represents an animation ID, a startindex field represents a start offset of the animation, which is a reference start position of the file, a frameCnt field represents the number of image frames forming the animation, a pos x field represents an x-coordinate of the display section 140 for displaying the animation, a pos y field represents a y-coordinate of the display section 140 for displaying the animation, a width field represents a width of the animation, and a height field represents a length of the animation. In addition, a byte name [Max_Avatar_Name_Len] field is used to record the avatar name in a case of the first animation Ani 1, and to represent an emotional value of the avatar in a case of the second animation Ani 2.

FIG. 13D is a view illustrating the structure of the animation image data for Ani 1 to Ani n. Referring to FIG. 13D, a Frame_data field is a header aligned at a front position of the animation data. The start offset of the Frame_data field is recorded in the startindex field of the header shown in FIG. 13C. Two member parameters (unsigned long m_start and unsigned long m_length) are iteratively stored in the Frame_data field according to the number of frame counters defined in the upper header. Herein, the parameter (unsigned long m_start) represents the start offset of the frame and the parameter (unsigned long m_length) represents a size of the frame (the number of compressed bytes). In addition, frame fields are used for storing compressed frame data. The frame fields are iteratively formed according to the number of frame counters shown in the header of FIG. 13C.

Therefore, the avatar file having the structure as shown in FIG. 13A has the header structure as shown in FIG. 13B. In addition, each animation shown in FIG. 13B has the header structure as shown in FIG. 13C, and the animation having the header structure has the data structure as shown in FIG. 13D. Accordingly, in cases of avatars displaying twelve animations as shown in FIGS. 6A to 6L, n of Ani n shown in FIG. 13B is 12, and twelve headers and twelve image data having the structure as shown in FIGS. 13C and 13D are provided.

Hereinafter, structures of the avatar house and the item will be described.

As shown in FIGS. 12A to 12D, the avatar house includes the combination of the back-scenery, the avatar and items. At this time, the avatar house has the structure as shown in FIG. 13A, and the header structure as shown in FIG. 13E. The avatar house is different from the avatar and stores only one compressed image and must maintain information about the items combined with the avatar house. Thus, the avatar house has the header structure shown in FIG. 13E, instead of the header structure shown in FIG. 13A.

Referring to FIG. 13E, a type field is an enum constant indicating the avatar house, and a "numAni" field represents the number of items combined with the avatar house (that is, items as shown in FIGS. 12A to 12D) and the number of back-sceneries of the avatar house (that is, item number +1). In addition, the number of Ani 1 to Ani n fields correspond to the number of items and back-sceneries (item number +1) combined with the avatar house. In the Ani 1 to Ani n fields, the Ani 1 field is header information for the back-scenery of the avatar house, and Ani 2 to Ani n fields are header information of items forming the avatar house. FIG. 13F is a diagram illustrating the header information for the back-scenery of the avatar house and FIG. 13G is a diagram illustrating the header information for the items forming the avatar house.

Referring to FIG. 13F, an ani ID field is identification information for the back-scenery of the avatar house, a startindex field is start offset information (a reference start position of the file) of the back-scenery image, and a frameCnt field represents the number of image frames (herein, the number is 1). In addition, a pos x field represents an x-coordinate value of the avatar, a pos y field represents a y-coordinate value of the avatar, a width field represents a width of the back-scenery of the avatar house, a height field represents a length of the back-scenery of the avatar house, and a byte name [Max_House_Name_Len] field is the name of the avatar house. The avatars displayed in the avatar house as mentioned above are emotional avatars corresponding to the avatars representing emotional states of the wireless terminals as shown in FIGS. 6A to 6G.

Referring to FIG. 13G, an ani ID field is an item index connected to the avatar house. A method for assigning the item index connected to the avatar house will be described in detail with reference to FIGS. 13H and 13I. Since the item is the just one-cut image, a startindex field and a framecnt field become "0". In addition, a pos x field represents an x-coordinate value of the item, a pos y field represents a y-coordinate value of the item, and a width field and a height field become "0". A byte name [Max_House_Name_Len] field becomes a null state. The items are combined with the avatar house through Ani 2 to Ani N shown in FIG. 13E and positions of Ani 2 to Ani n in the avatar house are determined as shown in FIG. 13G.

FIG. 13H is a diagram illustrating the item structure, and FIG. 13I is a diagram illustrating the item header structure. Referring to FIG. 13h, a type field is an enum constant indicating the item, and a "numAni" becomes "1" because the item is the just one-cut image. In addition, an Ani 1 field is an item header having the structure as shown in FIG. 13I. Referring to FIG. 13I, an ani ID field is identification information for the item, a startindex field is start offset information (a reference start position of the file) of the item, and a frameCnt field represents the number of image frames (herein, the number is 1). In addition, an int x field becomes "0", an int y field becomes "0", an int width field represents a width of the item, an int height field represents a length of the item, and a byte name [Max_Item_Name_Len] field is the name of the item.

Therefore, the avatar house having the above structure includes the back-scenery image, items combined with the avatar house and position information thereof. In addition, the item has the structure including size information of the item.

The above characters (avatars, avatar houses, items, etc) employ index parameters having index values in the form of serial numbers of file names store in the memory. Only two index parameters (g_avatar and g_avatar_house) for the selected avatar and the avatar house are stored in the memory 113. That is, the wireless terminal may include at least two avatars and at least two avatar houses. In this case, the avatars and avatar houses have structures as shown in FIGS. 13A to 13H, respectively.

The index parameter (g_avatar) has the structure as shown in FIG. 13J. The index parameter (g_avatar) is a field for storing index parameter information of the avatar currently selected from the wireless terminal. Referring to FIG. 13J, an emotion field represents an emotional value of the wireless terminal, a Cut-Frame field represents the frame of the avatar animation to be currently displayed, a maxFrame field represents the number of the animation frames being currently displayed, a CurMotion field represents an end of the avatar animation being currently displayed (0 or end of animation), and an index field indicates an actual file or a ROM in which the images are stored.

In a case of a default avatar or a default avatar house, the index field represents a negative number. Accordingly, if g_avatar.index = 3, the currently selected avatar is an avatar file corresponding to an avatar_03. In addition, if g_avatar_house.index = -2, the currently selected avatar house represents a second default avatar house.

The wireless terminal having the above character file makes communication with other wireless terminals.

As a wireless Internet network has been opened to the public, users of the wireless terminals can easily access the contents of the Internet network through a WINC scheme or hot key scheme. The wireless terminal having a character display function may receive/transmit characters in a phone to phone scheme through the wireless Internet network without connecting to the service network of wireless communication providers. In addition, the wireless terminal having the character display function can directly receive/transmit characters from/to other wireless terminals through the communication interface 150. In addition, it is also possible to receive/transmit characters from/to other wireless terminals by selecting an enhanced messaging service (EMS), which is adaptable for character image transmission, from among five message functions (SMS, EMS, MMS, E-mail, and Fax) of the Symbian operating system 7.0.

The character of the wireless terminal may perform a backup service function. The backup service function signifies a service for transmitting various resources ( telephone numbers, text messages, schedules, downloaded pictures, ringing sound, games, music, etc) of the wireless terminal to a backup server from "Symbian" or "Normal phone RTOS" through a wireless network.

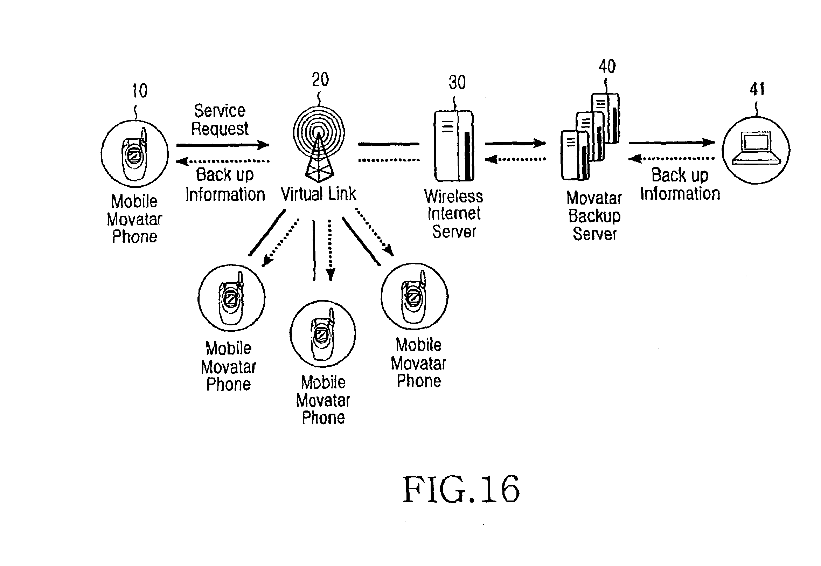

FIG. 16 is a diagram illustrating a structure of a network for performing a backup service of a wireless terminal 10 having a character display function according to one embodiment of the present invention.

Referring to FIG. 16, the wireless terminal 10 equipped with the character display function has the structure as shown in FIG. 1, so the wireless terminal 10 can make character-communication with other wireless terminals. The wireless terminal 10 requests a service so as to store internal resources in a backup server 40 when a predetermined period of time elapses or on the request of users. Herein, the resources of the wireless terminal 10 include contents information, such as telephone numbers, text messages, schedules, image data, audio data, games, characters, etc. Thus, a wireless communication network 20 transmits the backup information of the wireless terminal 10 to an Internet server 30. Herein, the wireless communication network 20 includes a base station transceiver (BTS), a base station controller (BSC), and a mobile communication exchanger. Then, the Internet server 30 transmits the backup information of the wireless terminal 10 to a backup server 40, so that the backup server 40 stores the backup information of the wireless terminal 10 in a predetermined region and transmits a response message to the wireless terminal 10. The response message is transmitted to the wireless terminal 10 through the Internet server 30 and the wireless communication network 20.

The character backup service is performed through an agent function of the "character". In addition, the character backup service can be automatically performed when the user does not use the wireless terminal within a predetermined time interval (once a week or once a month), or the character backup service can be manually performed by the user. The backup server 40 for storing and backing up the resources of the wireless terminal may operate through the wireless Internet network as shown in FIG. 1. In addition, the backup service can be performed when the wireless terminal requests the backup service or when a PC 41 requests the backup service. An accounting routine is necessary for charging payment when the wireless terminal accesses the backup server 40 for the purpose of download services (e.g. game download). The accounting routine is a procedure for obtaining a "safe key". In this manner, the character may obtain a new item (backup). The backup service procedure according to an embodiment of the present invention must include the step of storing payment information in the backup server. In addition, a discriminatory point of the backup service according to an embodiment of the present invention is that the character may perform a data restore function. That is, if the wireless terminal of the user is initialized or the wireless terminal of the user is exchanged with a new one, the data stored in the previous wireless terminal can be reset in the new wireless terminal based on the backup service according to the present invention.

In addition, the wireless terminal can directly transmit the character file to other wireless terminals through a local.

In this case, the wireless terminal must be equipped with a local communication module. Currently available local communication includes an IrDA communication scheme, a blue-tooth communication scheme and a USB communication scheme. Herein, the IrDA communication scheme is an optical communication scheme using an infrared diode, and the blue-tooth communication scheme is an RF communication scheme. The present invention will be described on the assumption that the local communication module adopts the IrDA communication scheme.

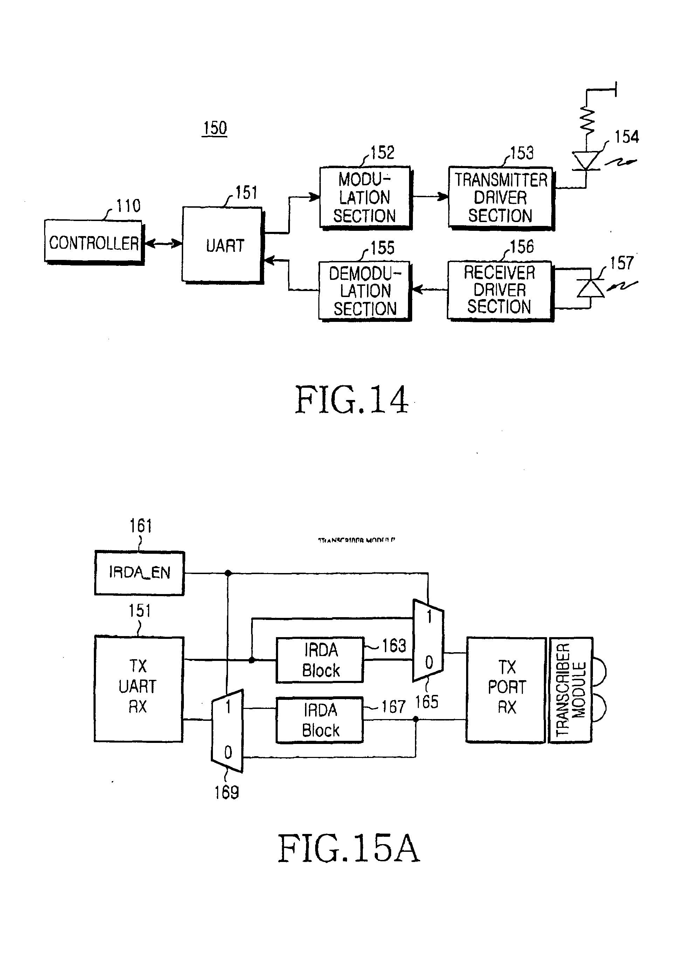

FIG. 14 illustrates the structure of the local communication section 150 shown in FIG. 1, in which the local communication section 150 is an IrDA communication section.

Referring to FIG. 14, a universal asynchronous receiver/transmitter (UART) 151 outputs serial data by converting parallel data of the controller 110 into the serial data and outputs the parallel data to the controller 110 by converting the serial data into the parallel data. A modulation section 152 modulates the serial data output from the UART 151 into an infrared transmission signal. A transmitter drive section 153 drives a transmitter diode 154 in such a manner that the infrared transmission signal output from the modulation section 152 can be transmitted through the transmitter diode 154. A receiver drive section 156 converts the infrared signal received in a receiver diode 157 into an electric signal. A demodulation section 155 demodulates the infrared signal output from the receiver drive section 156 and outputs the demodulated signal to the UART 151.

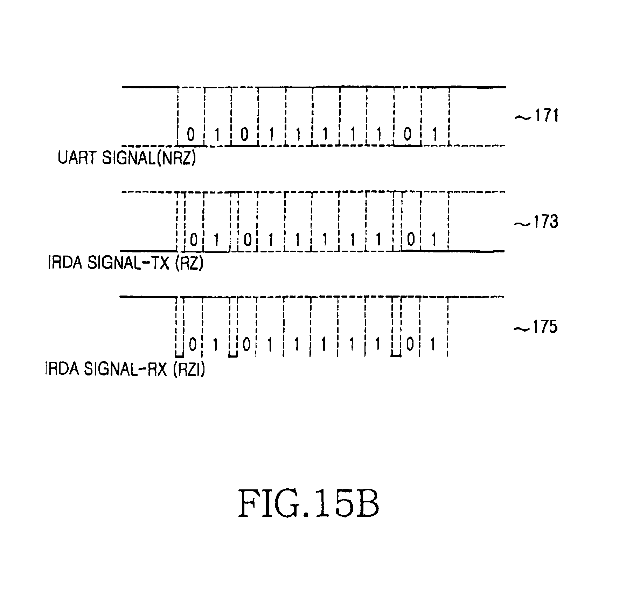

FIG. 15A illustrates the structure of the local communication section 150 employing an IrDA protocol scheme, and FIG. 15B illustrates an infrared modulation signal and an infrared demodulation signal output from the local communication section 150 shown in FIG. 15A.

Referring to FIGS. 15A and 15B, an IrDA block 163 and a multiplexer 165 correspond to the modulation section 152, and an IrDA block 167 and a multiplexer 169 correspond to the demodulation section 155. The signal output from the UART 151 has a non return to zero (NRZ) pulse 171 as shown in FIG. 15B. If the signal having the NRZ pulse 171 is modulated through the modulation section 152, a signal having a return to zero (RZ) pulse 173 can be obtained. The IrDA signal having the RZ pulse 173 as shown in FIG. 15B is applied to the transmitter diode 154 and output as an infrared signal through the transmitter diode 154. In addition, the signal received in the receiver diode 157 has a pulse 175 shown in FIG. 15B. That is, the infrared receive signal is an inverse signal of the transmit signal. Thus, the demodulation section 175 demodulates the receive signal having the pulse 175 into the signal having the pulse 171 shown in FIG. 15B and applies the demodulated signal to the UART 151.

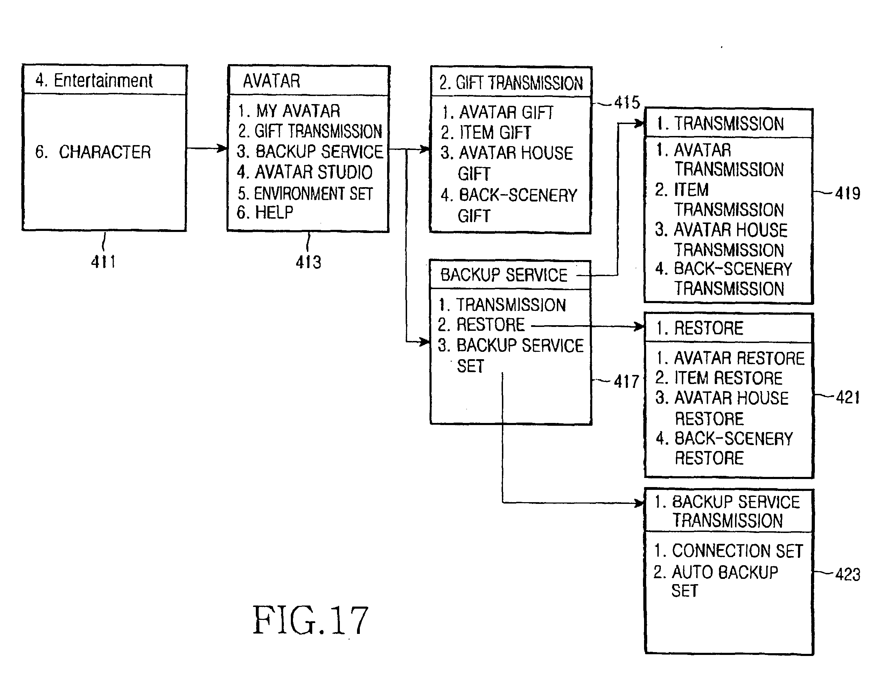

FIG. 17 is a view illustrating a menu used when transmitting and backing up character files according to one embodiment of the present invention. When a user selects an avatar transmission menu, the controller 110 displays the transmission menu in the display section 140 so as to transmit the character files according to the selection of the user. Herein, the character files are transmitted to the backup server 40 through the wireless network or to other wireless terminals or terminal units through the local communication section 150. At this time, the transmission of the character files to other wireless terminals through the local communication section 150 can be performed in a state that a term "gift transmission" is being displayed in the menu.

Referring to FIG. 17, if the user selects an entertainment menu from a main menu, the controller 110 displays a submenu 411 of the entertainment menu including a character menu. In this state, if the user selects the character menu, the controller 110 detects it and displays submenus 413 of the character menu in the display section 140.

In this state, if the user selects a gift menu 415, the controller 110 displays submenus of the gift menu for transmitting an avatar, an item, an avatar house, etc.

At this time, if the user selects one of the submenus of the gift menu 415, the selected character is transmitted to other wireless terminals or terminal units through the local communication section 150.

In addition, if the user selects a backup service from the submenu 413, the controller 110 displays a submenu 417 of the backup service in the display section. At this time, the submenu 417 of the backup service includes character transmission, character file restore, and backup service setting. In this state, if the user selects the character transmission, the controller 110 displays a submenu 419 of the character transmission in the display section 140. In addition, if the user selects the character file restore or backup service setting, the controller 110 displays a submenu 421 or a submenu 423 in the display section 140. When the character transmission is selected, the selected character file is transmitted to the backup server 40 through the communication section 121 and the wireless network.

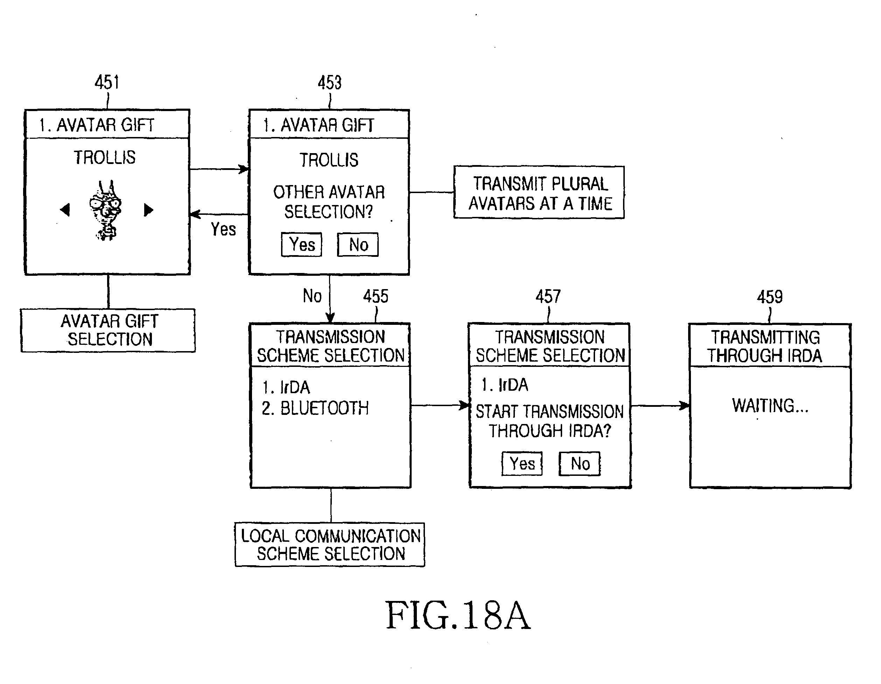

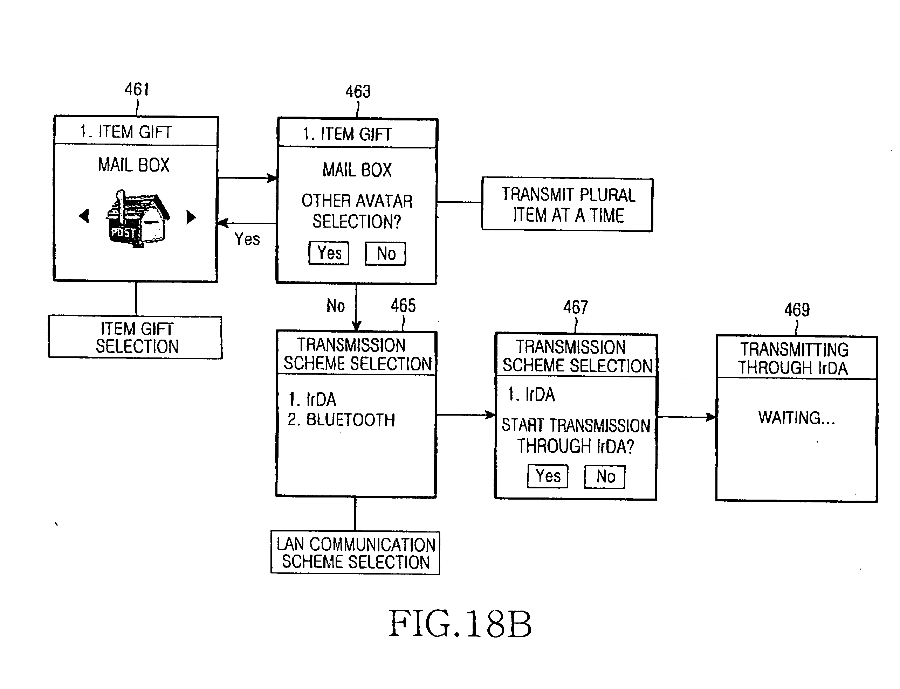

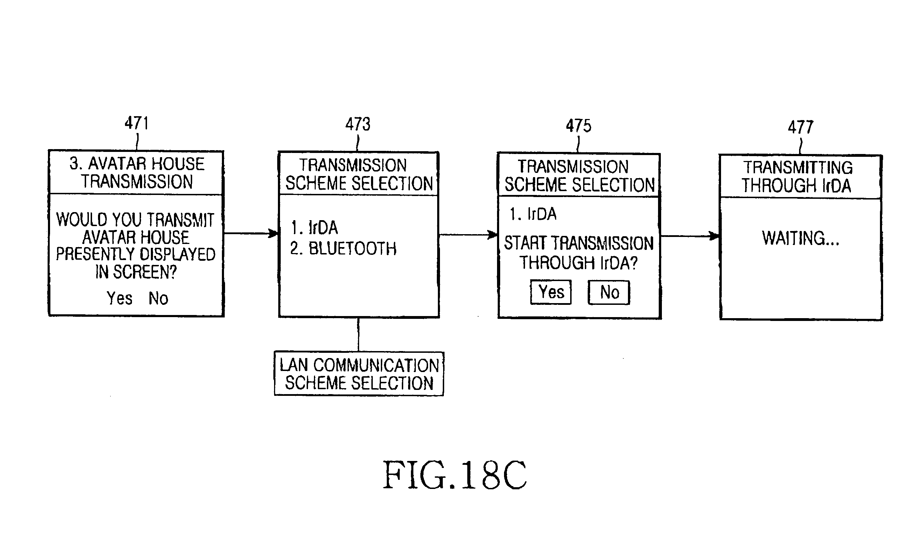

Hereinafter, a gift transmission procedure will be described in detail. FIG. 18A is a view illustrating a menu structure when the user selects an avatar gift from the submenu 415 shown in FIG. 17, FIG. 18B is a view illustrating a menu structure when the user selects an item gift from the submenu 415 shown in FIG. 17, and FIG. 18C is a view illustrating a menu structure when the user selects an avatar house gift from the submenu 415 shown in FIG. 17.

Referring to FIG. 18A, when the user selects the avatar gift from the submenu 415 shown in FIG. 17, the controller 110 displays an avatar image 451 in the display section 140. At this time, if the user selects one of the avatar images by operating directional keys displayed in the display section 140, the controller 110 displays the selected avatar image in the display section by reading the selected avatar image from the memory 113. That is, if the user selects the avatar image by operating the directional keys, the controller 110 accesses the memory 130 and displays the selected avatar image 451. In this state, if the user clicks a selection key or the selected avatar image 451 displayed in the display section 140, the controller 110 waits for transmitting the selected avatar image 451 displayed in the display section 140. At this time, the avatar file includes header information having the structures shown in FIGS. 3A to 3C, and frame images of the avatar file. In addition, the controller 110 displays an image 453 inquiring about selection of other avatars in the display section 140. At this time, if the user clicks a Yes-soft key, the controller 110 detects it and displays the next avatar image in the display section. The above procedure may be repeated until the user has selected all avatar images to be transmitted. After that, if the user clicks a No-soft key, the controller 110 detects it and displays an image 455 including local communication schemes used for transmitting avatar files. If the user selects one of the local communication schemes, the controller 110 displays an image 457 so as to transmit the avatar files through the selected local communication scheme. While the avatar files are being transmitted, an image 459 is displayed so as to indicate the state of the avatar files being transmitted.

Referring to FIG. 18B, if the user selects an item gift from the submenu 415 shown in FIG. 17, the controller 110 transmits selected items by performing procedures which are shown with reference numerals 461 to 469. At this time, the transmission procedure for the item is identical to the transmission procedure for the avatar file.

Referring to FIG. 18C, if the user selects an avatar house gift from the submenu 415 shown in FIG. 17, the controller 110 displays a menu 471 in the display section 140 so as to transmit the avatar house file, which is presently used in the wireless terminal. At this time, if the user clicks a Yes-soft key displayed in the menu 471, the controller 110 detects it and transmits the avatar house file while displaying menus 473 to 477 in the display section 140. The avatar house transmission procedure shown in FIG. 18C is designed to transmit the avatar house file, which is presently used in the wireless terminal. However, it is also possible to transmit a plurality of avatar house files. That is, the avatar house file comprises a back-scenery file and an item file. At this time, if a plurality of back-scenery files are provided, various avatar house files can be generated by using the back-scenery files. In this case, if the user selects an avatar house transmission menu, the plural avatar house files selected by the user can be transmitted while displaying the avatar houses in the same manner as the transmission of the avatar files and item files.

Although it is not described in detail, the back-scenery file included in the submenu 419 shown in FIG. 17 can be transmitted in the same manner as the transmission of the avatar files, item files and the avatar house files.

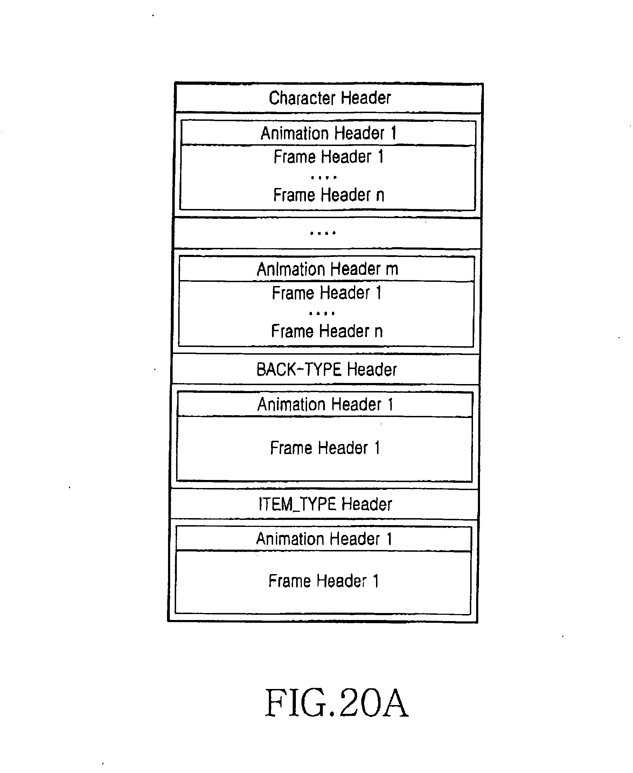

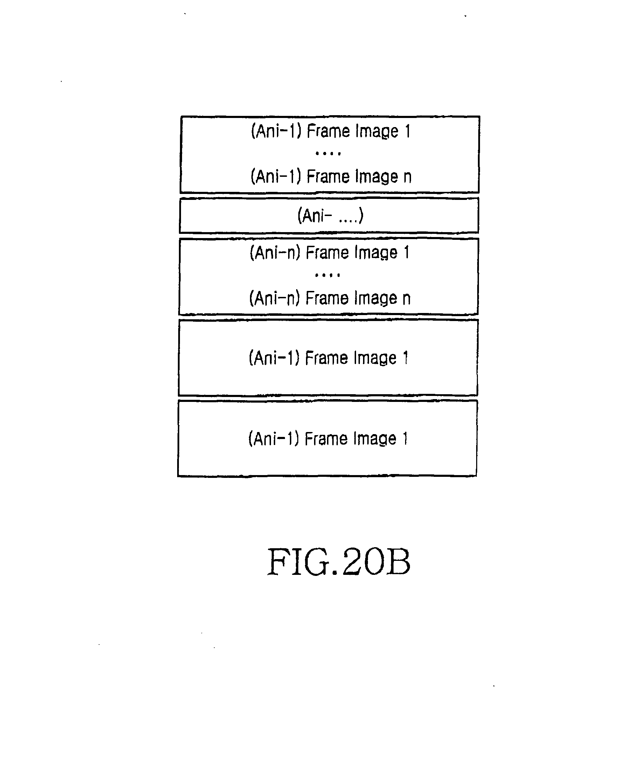

As mentioned above, if the user selects the gift transmission function of the character file, the controller 110 displays the character files in the display section. In this state, if the user selects a specific character file, the controller 110 transmits the selected character file through the local communication section. In addition, although FIGS. 18A to 18C illustrate the transmission procedure for character files of one character type, it is also possible to transmit character files of all character types at a time by previously selecting the character files of all character types. That is, if the character files are selected, the selected character files are prepared in the form of a transmission file. In this state, if the user wants to transmit the selected character files, the controller 110 transmits the transmission file so that the selected character files are transmitted at a time. If the user selects one avatar file, one back-scenery file, and one item file in order to transmit the above files, the controller 110 generates the transmission message by using the headers of the selected character files as shown in FIG. 20A and character images corresponding to the headers as shown in FIG. 20B, so as to transmit the character files at a time through the local communication section 150. If the character images are non-compressed image data, the character images shown in FIG. 20B must be compressed through a predetermined compression scheme.

Hereinafter, a backup service procedure will be described in detail.

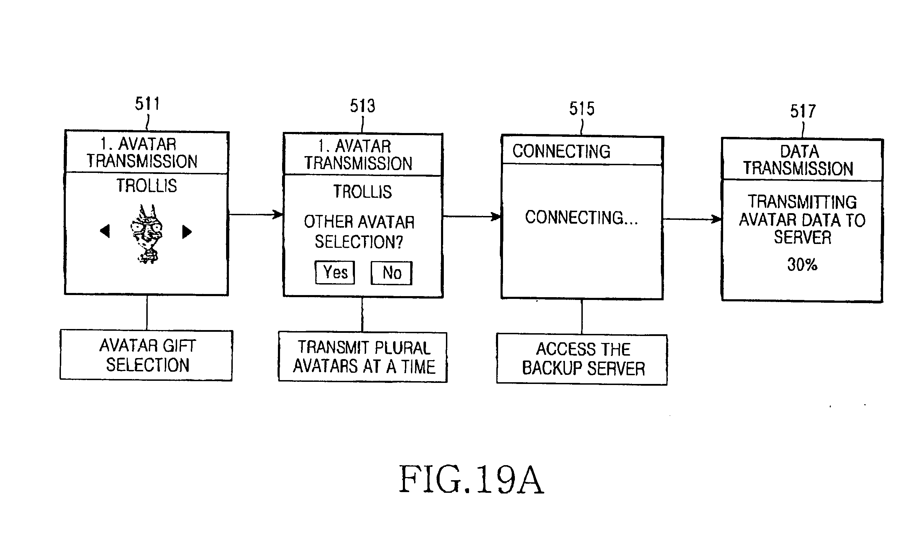

FIG. 19A is a view illustrating a character file transmission procedure when the user selects a character file backup transmission menu from the backup service menu, in which the avatar file is selected as the character file. Referring to FIG. 19A, if the user selects the avatar file transmission from the backup service menu, the controller 110 displays an avatar image 511 stored in the memory 113. In this state, the user selects one of the avatar images, the controller 110 displays an image 513 inquiring about selection of other avatars in the display section 140. The above procedure may be repeated until the user has selected all avatar images to be backup-transmitted. After that, the controller 110 tries to make connection with the backup server 40. At this time, the connecting state of the controller 110 to the backup server 40 is displayed in the display section 140 through an image 515. When the controller 110 connects with the backup server, the controller 110 transmits the selected avatar files to the backup server 40. At this time, the transmission state of the selected avatar files is displayed in the display section 140 through an image 517. Although FIG. 19A illustrates the transmission procedure of the avatar files selected by the user to the backup server 40, it is also possible to transmit all avatar files stored in the memory when a user selects a backup service menu.

The transmission procedure for the item file, the back-scenery file, and the avatar house file is similar to the transmission procedure of the avatar file as shown in FIG. 19A. At this time, a plurality of character files can be transmitted through the backup transmission procedure at the same time or the character files can be individually transmitted through the backup transmission procedure according to the types of the character files. The character files are transmitted to the backup server 40 through the wireless network. In addition, the avatar files transmitted to the backup server 40 have the structure including header information and avatar images corresponding to the header information as shown in FIGS. 3A to 3C.

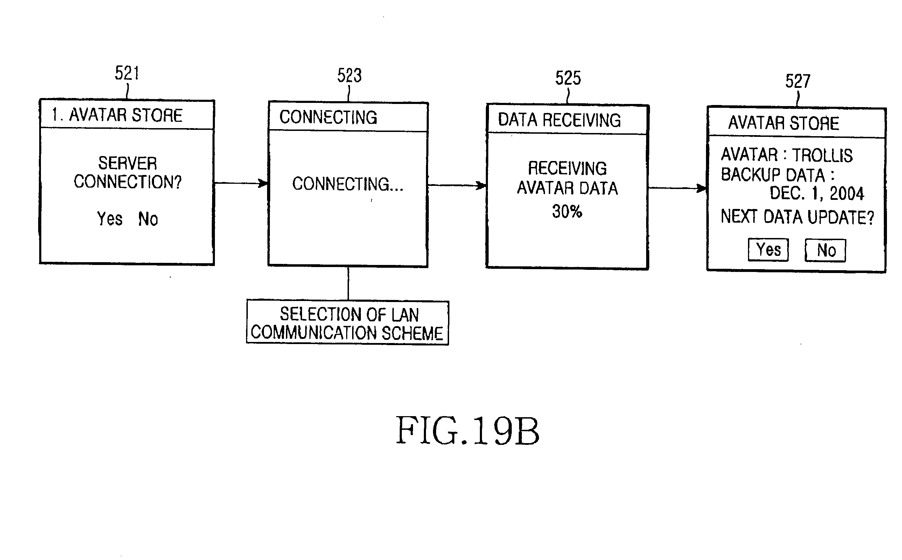

FIG. 19B is a view illustrating a procedure for receiving and storing the character files stored in the backup server 40. That is, the FIG. 19B shows a restore procedure for the avatar files. In a state that a menu 521 similar to the menu 411 shown in FIG. 17 is being displayed, if the user selects an avatar file restore menu, the controller 110 detects it and tries to make connection with respect to the backup server 40. At this time, the connecting state of the controller 110 to the backup server 40 is displayed in the display section 140 through an image 523. When the controller 110 connects with the backup server, the controller 110 receives avatar files which are downloaded from the backup server 40. At this time, the receiving state of the avatar files is displayed in the display section 140 through an image 525. When the reception for the avatar files has been completed, the controller 110 displays avatar file information and a text message inquiring about the restore of the avatar files through an image 527. At this time, the user requests for the restore of the avatar file, the controller 110 restores the received avatar files. In the meantime, the restore procedure for the item file, the back-scenery file, and the avatar house file is similar to the restore procedure of the avatar file as shown in FIG. 19B.

The character files, which are backup-serviced through the procedures as shown in FIGS. 19A and 19B, have the transmission structure as shown in FIGS. 20A and 20B.

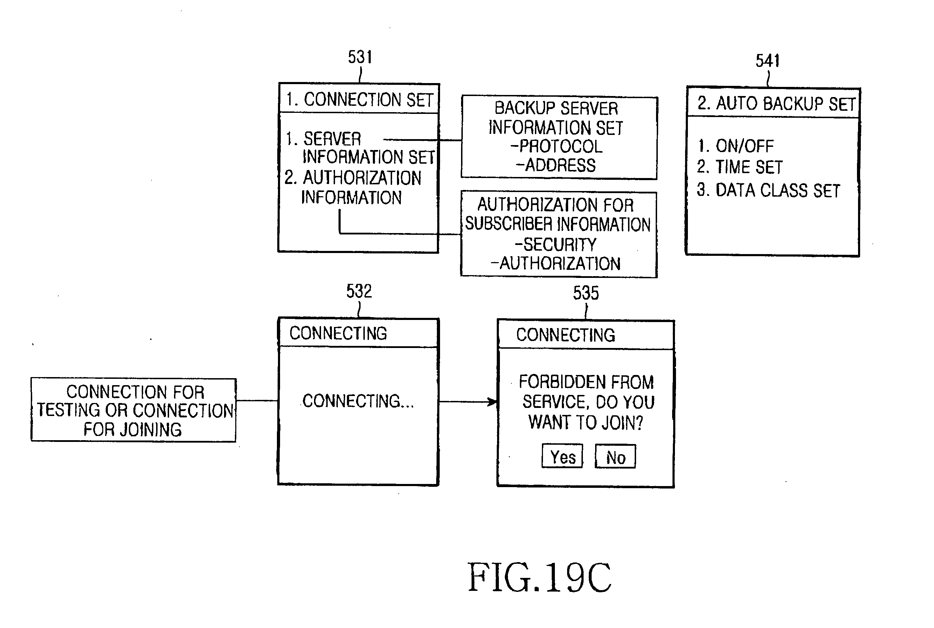

FIG. 19C is a view illustrating a menu structure for setting the backup service procedure as shown in FIGS. 19A and 19B.

Referring to FIG. 19C, a connection set menu and an auto backup set menu are displayed when the user selects the backup service set as shown in FIG. 17. If the user selects the connection set menu, the controller 110 displays a menu for a server information set and authorization information through an image 531. According to the server information set, a protocol and an address with respect to the backup server are set. The authorization information includes security and authorization. If the server information set or the authorization information is selected, the controller 110 tries to make connection to the backup server 40. At this time, the connection state of the controller 110 to the backup server 40 is displayed in the display section through an image 535. In addition, when the controller 110 completes the setting function with respect to the backup server 40 by successfully making connection to the backup server 40, the setting procedure ends. However, if the setting fails, the controller 110 displays the failure of the setting in the display section 140 through an image 535 and performs the resetting procedure.

When the auto backup menu is selected, the controller 110 displays information related to on/off, time set and data classes in the display section 140 through an image 541. In addition, the controller 110 sets auto backup parameters according to data input by the user. When the auto backup function has been established, the auto backup function is automatically carried out in a predetermined backup time, so that the character files can be restored by automatically backup-transmitting or receiving the character files.

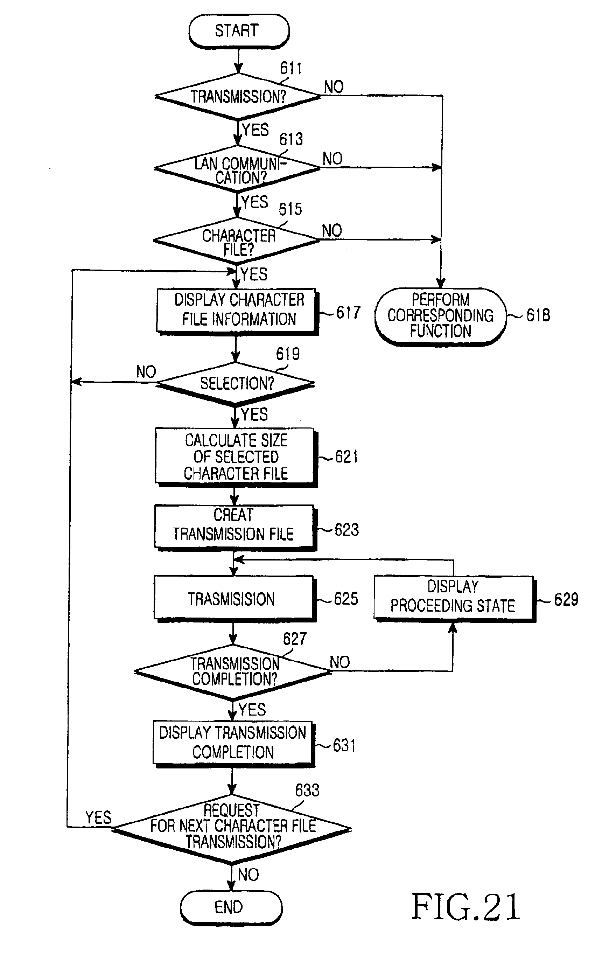

The above gift and backup services for the character files may be conducted according to predetermined procedures as shown in FIGS. 21 to 24.

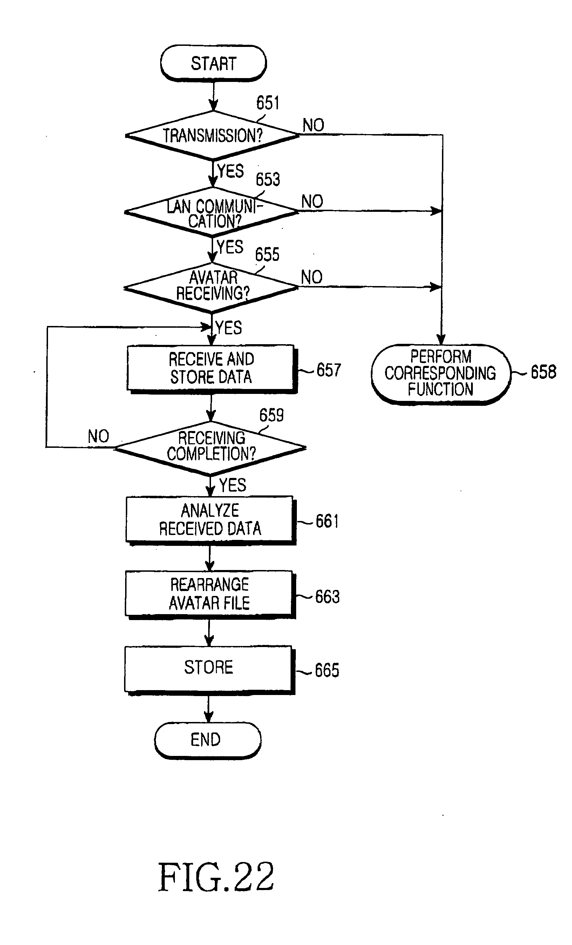

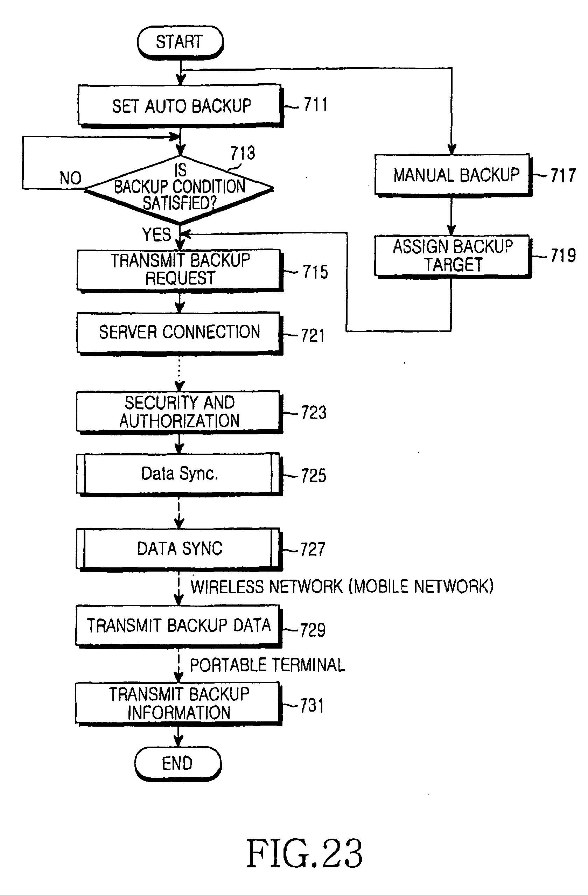

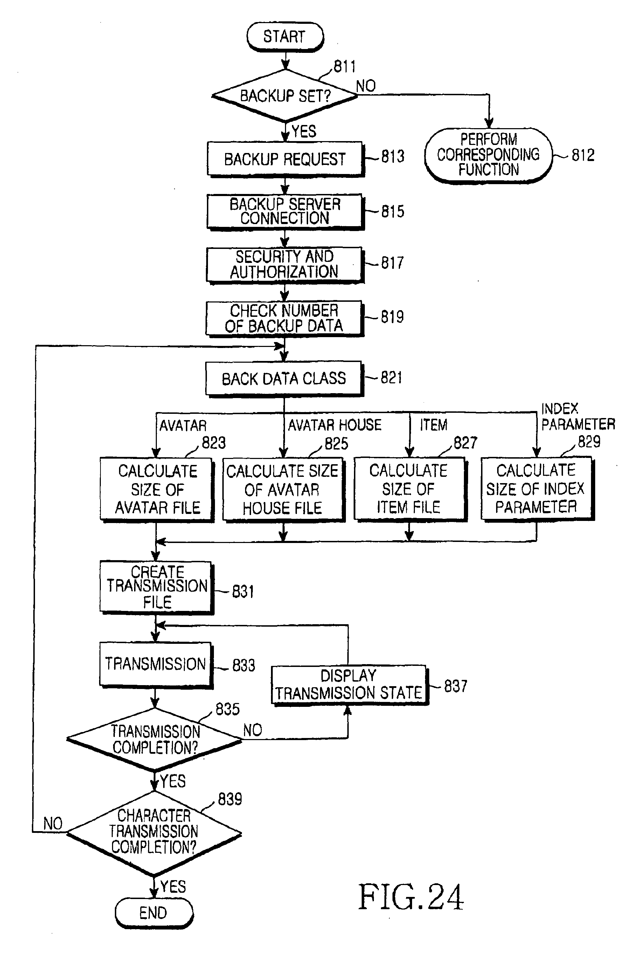

FIGS. 21 and 22 are flowcharts illustrating procedures of transmitting/receiving character files to/from other wireless terminals through the local communication section 150 according to one embodiment of the present invention. In addition, FIGS. 23 and 24 are flowcharts illustrating procedures of performing backup services for the character files between the wireless terminal and the backup server 40 through the wireless network. In the procedures shown in FIGS. 21 to 24, plural types of character files are transmitted/received. That is, differently from procedures shown in FIGS. 18A to 18C in which the character files are individually transmitted/received according to the types of the avatar file, the item file, and the avatar house file, the procedures shown in FIGS. 21 to 24 may allow the character files selected by the user to be transmitted regardless of the types thereof.

FIG. 21 is a flowchart illustrating the procedure of transmitting character files to other wireless terminals according to one embodiment of the present invention.

Referring to FIG. 21, if a transmission mode is selected by the user in a state as shown in FIG. 9A, the controller 110 detects it (step 611) and displays a transmission mode menu. At this time, the transmission mode menu may include local communication schemes. According to an embodiment of the present invention, the local communication scheme is assumed as an IrDA communication scheme. In this case, the controller 110 displays a menu in the display section 140 so as to allow the user to select the IrDA communication scheme. At this time, if the user of the wireless terminal selects the local communication function, the controller 110 detects it (step 613) and displays menus for character files transmittable in the local communication mode. However, if the user does not select the character file transmission function (step 615), the local communication function (step 613) or the character file transmission function (step 615), the controller performs a corresponding function (step 618).

At this time, if the user selects the character file transmission function, the controller 110 detects it (step 615) and displays information about the character files stored in the memory 113 in the display section 140 (step 617). At this time, the character file information displayed in the display section 140 may include a character file name. In addition, the image of the character file can be displayed together with the character file name when displaying the character file information. According to the present invention, it is assumed that the image of the character file is displayed together with the character file name (see, reference numerals 451 and 461 shown in FIGS. 18A and 18B). In order to display the image of the character file in the display section 140, the controller 110 displays an avatar sample in the display section 140 in response to an operation of the directional keys. In this state, if the user clicks a selection key, the character file corresponding to the image being displayed in the display section 140 may be selected.

In this state, if the user selects the character file to be transmitted, the controller 110 detects it (step 619), so the controller 110 calculates a size of the selected file (step 621). At this time, the character file includes the character header as shown in FIG. 3A, a plurality of animation headers as shown in FIG. 3B corresponding to the animation counter value of the character header, a plurality of frame headers as shown in FIG. 3C corresponding to the frame counter value of each animation header, and frame images corresponding to the frame headers. In addition, the character file may have the structure as shown in FIGS. 13A to 13J.

After that, the controller 110 generates a transmission message file by using the character file (step 623). At this time, the character file has a size-variable structure including various fields having variable sizes. Accordingly, the character file having the size-variable structure is converted into the character file transmission format as shown in FIGS. 20A and 20B or into the character files having the structure as shown in FIGS. 13A to 13J, thereby creating the transmission message format.

Then, the controller 110 transmits the transmission message format of the character file to the local communication section 150 (step 625). Upon receiving the transmission message format from the controller 110, the local communication section 150 converts the character file into the IrDA signal and transmits the IrDA signal. In addition, after transmitting the transmission message format of the character file in step 625, if it is determined that the character file is not final data, the controller 110 displays the transmission state of the character file in the display section 140 (step 629) while continuously transmitting the character file. However, if it is determined that the character file is the final data after step 625, the controller 110 detects it (step 627), so the controller 110 ends the transmission of the avatar data file (step 631) and displays the transmission completion state for the character file in the display section 140.

After that, the controller 110 checks whether there is a request for transmission for other character files (step 633). If the transmission for other character files is not requested, the controller 110 ends the local communication procedure. However, if the transmission for other character files is requested in step 633, the controller 110 returns to step 617 so as to perform the above procedure by selecting other character files. In addition, if at least two character files are selected in steps 617 and 619, the controller 110 detects it in step 633 and returns to step 621 so as to continuously transmit the selected avatar files.

When a multimedia data file is transmitted from a transmitting wireless terminal through the local communication scheme according to the procedure shown in FIG. 21, a receiving wireless terminal must process by receiving the multimedia data file. FIG. 22 is a flowchart illustrating a procedure of processing the multimedia data file in the wireless terminal including the local communication section 150 by receiving the multimedia data file through the local communication section 150 according to one embodiment of the present invention.

Referring to FIG. 22, when the multimedia data file is received in the wireless terminal through the local communication section 150, the controller 110 detects it though steps 651 and 653. If the multimedia data file is a character file, the controller 110 detects it (step 655). Thus, the controller 110 stores the character file received through the local communication section 150 in the memory 113 while performing steps 657 and 659. However, if the user does not select the character file transmission function (step 651), the local communication function (step 653) or the character file transmission function (step 655), the controller performs a corresponding function (step 658).

Then, the controller 110 analyzes the received character file through steps 661 and 663 so as to rearrange the character type character file. The received character file is a data file having a size-variable structure. Accordingly, the controller 110 rearranges the received character file and stores the rearranged character file in the memory 113 (step 665).

As mentioned above, the character gift function according to an embodiment of the present invention is a phone to phone function, so it is possible to instantly upgrade the character file after phone to phone communication. That is, if the transmitting wireless terminal transmits the character file to the receiving wireless terminal by using the character gift function, the receiving wireless terminal can upgrade the received character file such that the character file can be adapted for the receiving wireless terminal.

According to the character upgrade function (character gift function) of an embodiment of the present invention, the data received through the phone to phone scheme are not simply added to the wireless terminal as an additional index, but registered in a data list of the wireless terminal, so an actual upgrade for the character file can be achieved. To this end, according to the present invention, the controller 110 (that is, a character engine) recognizes and discriminates new data when receiving new data so as to upgrade the database with the new data. Thus, data separation and data rearrangement procedures are conducted as described above in relation to the phone to phone scheme. Such an upgrade of the database can be realized because the character has a unique structure as mentioned above. At this time, the character header, the animation header and the frame header are used as a base for analysis and determination. In a case of the avatar file, if the avatar file is recognized as additional information, variable avatar information (emotion : sense, popularity and intelligence) is updated.

FIG. 23 is a flowchart illustrating a procedure of backing up the character file of the wireless terminal in the backup server 40 through the wireless network according to one embodiment of the present invention.

Referring to FIG. 23, if the wireless terminal is equipped with an auto backup function or a manual backup command is generated by the user, the wireless terminal conducts the backup service according to the procedure as shown in FIG. 23. At this time, if the wireless terminal is equipped with the auto backup function, the controller 110 of the wireless terminal detects the auto backup order in the event of a predetermined backup time (step 711), and checks whether backup conditions are satisfied (step 713). If the backup conditions are satisfied, the controller 110 requests the backup of the wireless terminal (step 715). At this time, if the wireless terminal is equipped with the auto backup function, the user presets and stores backup time and the character files for the backup when setting the auto backup function. In addition, if the manual backup command is generated by the user, the controller 110 detects it (step 717) and assigns a backup target according to information of the backup target input by the user (step 719). The manual backup function for the character files can be performed by using the menu structures shown in FIGS. 17 and 19A.

When the auto backup or the manual backup is selected, the controller 110 checks the backup targets (character files) and generates a backup service request message trough the communication section 121 so as to connect with the backup server 40 (step 721). When the controller 110 connects with the backup server 40, the controller 110 of the wireless terminal performs a security and authorization procedure with respect to the backup server 40 (step 723). Herein, the security and authorization procedure may be a conventional security and authorization procedure performed through the Internet. In addition, a security setting procedure of the backup server 40 can be performed by using the menu structure as shown in FIG. 19C.

After that, the controller 110 performs data synchronization with the assigned character file (step 725). Since the character file includes binary data, the data synchronization may be performed by allocating division intervals after determining the size of the character file. When the data synchronization for the character file backup has been completed, the controller 110 transmits backup data (step 727). Backup information is transferred to the backup server 40 through the wireless communication network 20 and the Internet server 30. At this time, the backup server 40 stores the backup information transmitted thereto from the wireless terminal (step 729). After that, when the backup information has been entirely stored, the backup server 40 generates a response message and transmits the response message to the wireless terminal by way of the Internet server 30 and the wireless communication network 20. Thus, the wireless terminal can receive the response message from the backup server 40.

FIG. 24 is a flowchart illustrating a procedure of transmitting character files from the wireless terminal to the backup server 40 according to one embodiment of the present invention. Herein, all character files may have the same structure as shown in FIGS. 3A to 3C, or may have mutually different structures as shown in FIGS. 13A to 13J according to the character types thereof, such as the avatar type, avatar house type, item type and back-scenery type. In addition, the character files can be stored in the memory 113 in the form of compressed data or non-compressed data. The following description is prepared on the assumption that the character files have the structures as shown in FIGS. 13A to 13J and stored in the memory 113 in the form of compressed data. However, it should be noted that the character file backup service according to this embodiment of the present invention is also applicable for non-compressed character files having the structure as shown in FIGS. 3A to 3C.

Referring to FIG. 24, in the event of the auto backup time or the manual backup command is requested, the controller 110 detects it (step 811) and tries to make connection with the backup server 40 while performing steps 813 and 815. In the event there is no backup being set (step 811), the controller 110 performs a corresponding function. When the controller 110 connects with the backup server 40, a security and authorization procedure is carried out (step 817). The security and authorization procedure is identical to that of FIG. 23. Then, the controller 110 checks the number of character fields to be backed up (step 819). Herein, the character file may include one avatar file, at least one avatar house file, and at least one item file. That is, the avatar file includes at least one or at least two avatar files and the avatar house file also includes at least one or at least two avatar house files selected from among character files stored in the wireless terminal. In addition, the item files are classified into items connected to the avatar house and items which do not connect with the avatar house.

In addition, the user of the wireless terminal can select the characters when setting the manual backup function for backing up the characters. In this case, the user can selectively backup the avatars, avatar houses or items. That is, the user of the wireless terminal can selectively backup the avatar, which is presently used, or can selectively backup the avatars from among the characters.

After checking the number of the characters to be backed up in step 819, the controller 110 checks the character type of the character file to be presently backed up (step 821). Herein, the character type may include the avatar type, the avatar house type, the item type or the index parameter. According to this embodiment of the present invention, the character files are backed up in the order of the avatar type, the avatar house type, the item type and the index parameter.

In step 821, if the character to be backed up is the avatar file, the controller 110 detects it and calculates the size of the avatar file to be transmitted (step 823). At this time, the avatar file has the structure as shown in FIG. 13A, the header has the structure as shown in FIG. 13B, and the animation headers Ani 1 to Ani n shown in FIG. 13B have the structures as shown in FIG. 13C. In addition, the image files of the animation 1 to animation n have the structure as shown in FIG. 13D. Accordingly, if the character file is the avatar file, the message transmission format is generated by using the avatar file having the structure as shown in FIGS. 13B to 13B (step 831), and transmits the message transmission format in the order shown in FIG. 13A (step 833). While the avatar file is being transmitted, the controller 110 displays the transmission state of the avatar file in the display section 140 (step 837). When the transmission of the avatar file has been completed, the controller 110 detects it (step 835) and checks whether all character files have been transmitted (step 839).

If it is determined in step 839 that the transmission of the avatar file has not been completed, the controller 110 detects it and returns to step 821 so as to check the type of the next character to be transmitted. If the next character is the avatar file, the above procedure is repeated.

However, if the it is determined in step 821 that next character is the avatar house file, the controller 110 performs step 825 so as to calculate the size of the avatar house file to be transmitted. At this time, the avatar house file has the structure as shown in FIG. 13A. That is, in the avatar file structure as shown in 13a, the header has the structure as shown in FIG. 13E in which the Ani 1 has the structure as shown in FIG. 13F, and the Ani 2 to Ani n have the structure as shown in FIG. 13G. Herein, FIG. 13F represents header information for the back-scenery of avatar house, and FIG. 13G represents header information of the item files connected to the avatar house. In addition, each of the animation 1 to animation n becomes the back-scenery of the avatar house and image files of the items. Accordingly, if the backup transmission file is the avatar house file, the controller 110 generates the message transmission format by using the header information and image files of the back-scenery of the avatar house and the item files connected to the back-scenery of the avatar house having the structures as shown in FIGS. 13E to 13G (step 831), and transmits the message transmission format in the order as shown in FIG. 13A (step 833). While the avatar house file is being transmitted, the controller 110 displays the transmission state of the avatar house file in the display section 140 (step 837). When the transmission of the avatar house file has been completed, the controller 110 detects it (step 835) and checks whether all character files have been transmitted (step 839).

If it is determined in step 839 that the transmission of the avatar house file has not been completed, the controller 110 detects it and returns to step 821 so as to check the type of the next character to be transmitted. If the next character is the avatar house file, the above procedure is repeated.

However, if the it is determined in step 821 that next character is the item file, the controller 110 performs step 825 so as to calculate the size of the item file to be transmitted. At this time, the item file has the just one-cut frame structure. That is, in the item file structure as shown in 13A, the header has the structure as shown in FIG. 13H in which the Ani 1 has the structure as shown in FIG. 13I because the item has the just one-cut frame image, and the animation has the just one-cut frame image. Accordingly, if the backup transmission file is the item file, the controller 110 generates the message transmission format by using the header information and image files of the item file having the structures as shown in FIGS. 13H to 13I (step 831), and transmits the message transmission format (step 833). While the item file is being transmitted, the controller 110 displays the transmission state of the item file in the display section 140 (step 837). That is, the controller 110 transmits the item files stored in the wireless terminal while repeating the above procedure. When the transmission of the item file has been completed, the controller 110 detects it (step 835) and checks whether all character files have been transmitted (step 839).

If it is determined in step 839 that the transmission of the character file has not been completed, the controller 110 detects it and returns to step 821 so as to check the type of the next character to be transmitted. At this time, if the next character is a file related to the index parameter, the controller 110 performs step 829 so as to calculate the file size of the avatar index parameter as shown in FIG. 13J. The controller 110 transmits the file related to the avatar index parameter while performing the above procedure. Herein, the index parameter of the avatar file includes the current emotional value of the wireless terminal as shown in FIG. 13J.

In addition, as mentioned above, when all character files, such as avatar files, avatar house files, item files and files related to the index parameters, have been transmitted, the controller 110 detects it in step 839 and ends the character backup procedure.

As describe above, according to embodiments of the present invention, it is possible to store the characters of various files in the wireless terminal having a character agent function capable of displaying the state of the wireless terminal and the event by using the characters. In addition, the character files can be stored with a common file structure regardless of the types of the character files or can be individually stored according to the types of the character files. Furthermore, the character files can be transmitted between wireless terminals by using the gift function, facilitating the upgrade for the character files of the wireless terminal. In addition, various resources stored in the wireless terminal can be stored in the backup server through the wireless communication network.

While the invention has been shown and described with reference to certain embodiments thereof, it should be understood by those skilled in the art that various changes in form and details may be made therein without departing from the spirit and scope of the invention as defined by the appended claims.

## Claims

1. An apparatus for processing a character file of a wireless terminal having a character agent function, the apparatus comprising:
a character memory for storing a character structure and character images, the character structure having a character type and character image information, the character image having at least one frame image;
a controller for performing the character agent function by processing character structure data and character image data stored in the character memory by analyzing an operational state of the wireless terminal; and
a display section for displaying the character structure and image information output from the controller.

2. The apparatus as claimed in claim 1, wherein the character memory comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, and a number of frame headers corresponds to the number of frame images of each animation header.

3. The apparatus as claimed in claim 2, wherein the character header comprises the character type, description information for explaining the character type, and information related a number of animation classes which are expressed in the character type.

4. The apparatus as claimed in claim 3, wherein the animation header comprises an animation ID for identifying a motion animation or a motion image of the character and information related to a number of frame images for expressing the animation.

5. The apparatus as claimed in claim 4, wherein the animation header further comprises a description message for explaining a character motion of the animation ID.

6. The apparatus as claimed in claim 4, wherein the animation header further comprises a start index, which is a start address of a storage position of the frames images of the animation.

7. The apparatus as claimed in claim 4, wherein the frame header comprises start position data of the frame image, size data of the frame image, and display time interval data between frames.

8. The apparatus as claimed in claim 3, wherein the character type is one of an avatar type, an item type, an avatar house type, and a back-scenery type.

9. The apparatus as claimed in claim 8, wherein an avatar character header of the avatar type comprises data indicating the avatar type, detailed information data having an avatar ID for identifying a sort of avatars, a description for the avatar, and an emotional value of the avatar, and an animation counter for representing a number of animations expressed by the avatars.

10. The apparatus as claimed in claim 9, wherein the detailed information data of the avatar header further comprises a name of the avatar, and a sort of the avatars.

11. The apparatus as claimed in claim 9, wherein the emotional value of the detailed information data is obtained by analyzing an operation of the wireless terminal based on a sense index, a popularity index and an intelligence index.

12. The apparatus as claimed in claim 9, wherein the emotional value of the avatar animation header comprises an animation ID for identifying a sort of motions of the avatar animations, message data representing emotion of avatar animations and events, and a frame counter for representing a number of frame images of the avatar animations.

13. An apparatus for processing a character file of a wireless terminal having a character agent function, the apparatus comprising:
a character memory for storing a character structure and character images, the character structure having a character type and character image information, the character image having at least one frame image;
a controller for performing the character agent function by processing character structure data and character image data stored in the character memory by analyzing an operation of the wireless terminal, the controller creating a transmission message by using a character structure of a character and images selected in a character gift mode;
a local communication section for modulating and outputting the transmission message through a predetermined local communication scheme; and
a display section for displaying the character structure and structure information processed by the controller and for displaying a gift menu under a control of the controller in the character gift mode.

14. The apparatus as claimed in claim 13, wherein the character memory comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, and a number of frame headers corresponds to the number of frame images of each animation header.

15. The apparatus as claimed in claim 14, wherein the controller displays character types in the display section in the character gift mode in order to make a gift to other wireless terminals, displays character type images in the display section when the character type is selected, generates a transmission message by using character files corresponding to selected characters, and transmits the transmission message to the local communication section.

16. The apparatus as claimed in claim 15, wherein the character type is one of an avatar type, an item type, an avatar house type, and a back-scenery type.

17. The apparatus as claimed in claim 16, wherein, in the character gift mode, the controller generates the transmission message by using character structure information of the character file selected when the character type is selected and character images corresponding to the character structure information, in which the character file comprises a name and an image of the character type and the character structure information comprises a character header, an animation header, and a frame header.

18. An apparatus for processing a character file of a wireless terminal performing a character agent function by using the character file in which the wireless terminal is connected to a backup server for backing up the character file through a wireless network, the apparatus comprising:
a character memory for storing a character structure and character images, the character structure having a character type and character image information, the character image having at least one frame image;
a controller for performing the character agent function by processing character structure data and character image data stored in the character memory through analyzing an operation of the wireless terminal, the controller creating a transmission message by using a character structure of a character and images selected in a character backup service mode;
a communication section connected to the backup server through the wireless network so as to transmit the transmission message to the backup server by converting the transmission message into a wireless signal; and
a display section for displaying the character structure and structure information processed by the controller and for displaying a backup service state under a control of the controller in the character backup service mode.

19. The apparatus as claimed in claim 18, wherein the character memory comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, and a number of frame headers corresponds to the number of frame images of each animation header.

20. The apparatus as claimed in claim 18, wherein, in the backup service mode, the controller displays items of transmission, restore and backup service set so as to perform a function selected by a user.

21. The apparatus as claimed in claim 20, wherein, when the transmission item is selected, the controller displays transmittable character types in the display section, displays character type images in the display section when the character type is selected, generates a transmission message by using character files corresponding to selected characters, and transmits the transmission message to the communication section.

22. The apparatus as claimed in claim 21, wherein the character type is one of an avatar type, an item type, an avatar house type, and a back-scenery type.

23. The apparatus as claimed in claim 22, wherein, when the transmission item is selected, the controller generates the transmission message by using character structure information of the character file selected when the character type is selected and character images corresponding to the character structure information, in which the character file comprises a name and an image of the character type and the character structure information comprises a character header, an animation header, and a frame header.

24. The apparatus as claimed in claim 22, wherein, when the restore item is selected, the controller requests transmission of a backup character file through the communication section and stores the received character file in the character memory.

25. The apparatus as claimed in claim 20, wherein, when the backup service setting item is selected, the controller displays a menu having backup time and character files to be backed up, registers selected time and character files, and transmits the character file in an event of the backup time.

26. An apparatus for processing a character file of a wireless terminal performing a character agent function by using the character file in which the wireless terminal is connected to a backup server for backing up the character file through a wireless network, the apparatus comprising:
a character memory for storing a character structure and character images, the character structure having a character type and character image information, the character image having at least one frame image;
a controller for performing the character agent function by processing character structure data and character image data stored in the character memory through analyzing an operation of the wireless terminal, the controller creating a transmission message by using a character structure of a character and images selected in a character backup service mode or a character gift mode;
a local communication section for modulating and outputting the transmission message through a predetermined local communication scheme;
a communication section connected to the backup server through the wireless network so as to transmit the transmission message to the backup server by converting the transmission message into a wireless signal; and
a display section for displaying the character structure and structure information processed by the controller and for displaying a backup service state under a control of the controller in the character backup service mode.

27. A method for transmitting a character file of a wireless terminal performing a character agent function, the method comprising the steps of:
displaying images of stored character files when a character transmission mode is selected;
creating a transmission message by using the character file having character file structure information and character images when a character image is selected; and
transmitting the transmission message of the character file.

28. The method as claimed in claim 27, wherein the character file comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, and a number of frame headers corresponds to the number of frame images of each animation header.

29. The method as claimed in claim 28, wherein the character header comprises the character type, description information for explaining the character type, and information related a number of animation classes which are expressed in the character type.

30. The method as claimed in claim 29, wherein the animation header comprises an animation ID for identifying a motion animation or a motion image of the character and information related to a number of frame images for expressing the animation.

31. The method as claimed in claim 30, wherein the frame header comprises start position data of the frame image, size data of the frame image, and display time interval data between frames.

32. The method as claimed in claim 31, wherein the character type is one of an avatar type, an item type, an avatar house type, and a back-scenery type.

33. The method as claimed in claim 28, further comprising the steps of displaying an image inquiring about selection of other character files in the display section after selecting the character file to be transmitted, and returning to the character file display step when the selection of other character files is determined.

34. The method as claimed in claim 28, further comprising the steps of displaying transmission schemes after creating a transmission message of the character file, and outputting the transmission message of the character file to a communication section corresponding to a selected transmission scheme.

35. The method as claimed in claim 34, wherein the transmission schemes include a backup service scheme for transmitting the character file to the backup server through the wireless network, and a local communication scheme for performing local communication with other wireless terminals.

36. A method for transmitting a character file of a wireless terminal performing a character agent function to other wireless terminals located in a vicinity of the wireless terminal, the method comprising the steps of:
displaying types of stored character files when a character communication mode is selected;
displaying a selected type of character images when one of types of character files is selected;
creating a transmission message by using the character file having character file structure information and character images when the character image is selected; and
transmitting the transmission message of the character file to other wireless terminals through a local communication section.

37. The method as claimed in claim 36, wherein the character file comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, and a number of frame headers corresponds to the number of frame images of each animation header.

38. The method as claimed in claim 37, wherein the character type is one of an avatar type, an item type, an avatar house type, and a back-scenery type.

39. The method as claimed in claim 38, wherein the character header comprises the character type, description information for explaining the character type, and information related a number of animation classes which are expressed in the character type.

40. The method as claimed in claim 39, wherein the animation header comprises an animation ID for identifying a motion animation or a motion image of the character and information related to a number of frame images for expressing the animation.

41. The method as claimed in claim 39, wherein the frame header comprises start position data of the frame image, size data of the frame image, and display time interval data between frames.

42. The method as claimed in claim 36, further comprising the steps of displaying an image inquiring about selection of other character files in the display section after selecting the character file to be transmitted, and returning to the character file display step when the selection of other character files is determined.

43. The method as claimed in claim 28, further comprising the steps of displaying local communication schemes after creating a transmission message of the character file, and outputting the transmission message of the character file to a communication section corresponding to a selected local communication scheme.

44. A method for transmitting a character file of a wireless terminal performing a character agent function to other wireless terminals located in a vicinity of the wireless terminal, the method comprising the steps of:
checking whether a character file is received during a character receiving mode;
storing the character file upon receiving the character file; and
registering the received character file as a character having the character agent function upon an update request.

45. A method for processing a character file of a wireless terminal performing a character agent function by using the character file in which the wireless terminal is connected to a backup server for backing up the character file through a wireless network, the method comprising the steps of:
displaying a backup set and a communication mode set when a character backup service mode is selected;
displaying an image of the character mode is selected, creating a transmission message by using a selected character file and transmitting the transmission message of the character file by accessing the backup server; and
displaying an automatic backup mode set if the backup mode set is selected and registering automatic backup time and character files to be backed up.

46. The method as claimed in claim 45, wherein the character file comprises a character header having information related to the character type and a number of animations according to a sort of characters, animation headers having information related to a sort of the animations and a number of frame images for expressing the animations, frame headers having information related to a size of frame images forming the animations and a display position of the animation, and frame images corresponding to frame images of the frame headers with respect to the sort of animations in the animation header, in which a number of the animation headers corresponds to the number of animations of the character header, and a number of frame headers corresponds to the number of frame images of each animation header.

47. The method as claimed in claim 46, further comprising a step of restoring data, wherein the data restoring step comprises the substeps of requesting transmission of backup character files by accessing to the backup server, and storing received character files.

48. The method as claimed in claim 46, wherein the character type is one of an avatar type, an item type, an avatar house type, and a back-scenery type.

49. The method as claimed in claim 46, further comprising the steps of creating a transmission message by using the character file, which is registered through an automatic backup, in an event of automatic backup time, and transmitting the transmission message of the character file by accessing the backup server.

50. A method for processing a character file of a wireless terminal performing a character agent function by using the character file in which the wireless terminal is connected to a backup server for backing up the character file through a wireless network, the method comprising the steps of:
registering backup time and character files to be backed up in a backup setting mode; and
creating a transmission message by using the registered character file during the registered backup time and transmitting the transmission message of the character file by accessing the backup server.
